(19) Europäisches Patentamt
European Patent Office
Office européen des brevets

(11) EP 4 379 756 A1

(12) **EUROPEAN PATENT APPLICATION**
published in accordance with Art. 153(4) EPC

(43) Date of publication:
**05.06.2024 Bulletin 2024/23**

(21) Application number: **22849420.9**

(22) Date of filing: **25.07.2022**

(51) International Patent Classification (IPC):
***H01F 1/44** (2006.01)* ***C08K 3/22** (2006.01)*
***C08K 5/098** (2006.01)* ***C08K 5/13** (2006.01)*
***C08K 5/3477** (2006.01)* ***C08K 5/372** (2006.01)*
***C08K 5/5398** (2006.01)* ***C08L 51/00** (2006.01)*
***C08L 67/00** (2006.01)* ***C08L 101/00** (2006.01)*

(52) Cooperative Patent Classification (CPC):
**C08K 3/22; C08K 5/098; C08K 5/13; C08K 5/3477; C08K 5/372; C08K 5/5398; C08L 51/00; C08L 67/00; C08L 101/00; H01F 1/44**

(86) International application number:
**PCT/JP2022/028587**

(87) International publication number:
**WO 2023/008359 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.07.2021 JP 2021124070**

(71) Applicant: **FUJIFILM Corporation**
**Tokyo 106-8620 (JP)**

(72) Inventor: **SUZUKI, Ryota**
**Ashigarakami-gun, Kanagawa 258-8577 (JP)**

(74) Representative: **HGF**
**HGF Limited**
**1 City Walk**
**Leeds LS11 9DX (GB)**

# (54) MAGNETORHEOLOGICAL FLUID AND MAGNETORHEOLOGICAL FLUID DEVICE

(57) There are provided a magneto rheological fluid containing magnetic particles, a carrier fluid, an organic zinc compound, and melamine (iso)cyanurate, and a magneto rheological fluid device containing this magneto rheological fluid.

EP 4 379 756 A1

## Description

Technical Field

The production relates to a magneto rheological fluid and a magneto rheological fluid device.

Background Art

A magneto rheological fluid is also called an MR fluid and is a functional material expected to be useful in various use applications in recent years (see, for example, PTL1).

Citation List

Patent Literature

PTL1: JP6560073B

Summary of Invention

Technical Problem

The magneto rheological fluid is a fluid that contains magnetic particles and a carrier fluid and has a property of changing the rheology by applying a magnetic field. The magneto rheological fluid can exhibit a large yielding shear stress (hereinafter, also described as a "shear stress") in a case where a magnetic field is applied, as compared with a case where no magnetic field is applied. This is due to because, in a case where a magnetic field is applied, magnetic particles form clusters, which reduces the fluidity of the magneto rheological fluid. In a case of utilizing this property, the operation of various devices can be controlled by applying a magnetic field. As an example, an operation control of a brake using a magneto rheological fluid will be described. Such a brake is called a magneto rheological (MR) brake. The general structure of the MR brake is as follows. A disk that is rotatable in conjunction with an external shaft and a coil for generating a magnetic field is disposed in the inside of a brake, and a magneto rheological fluid is further enclosed therein. In a case where a magnetic field is applied to the magneto rheological fluid by generating a magnetic field from the coil, clusters of magnetic particles are formed in the magneto rheological fluid, perpendicular to the rotation direction of the disk. In a case where the disk is rotated in a state where clusters are formed, the clusters are cut by the disk, and a shear stress generated at this time is exhibited as a braking torque.

The brake is required to continue to stably exhibit braking performance even in a case of being repeatedly used. For that purpose, it is desired that the magneto rheological fluid has little deterioration in performance (that is, has excellent durability) even in a case where a magnetic field is repeatedly applied. The point applies not only to the MR brake but also to various devices using a magneto rheological fluid.

In consideration of the above circumstances, an aspect of the present invention is to provide a magneto rheological fluid having excellent durability.

Solution to Problem

An aspect of the present invention is as follows.

[1] A magneto rheological fluid comprising:

magnetic particles;
a carrier fluid;
an organic zinc compound; and
melamine (iso)cyanurate.

[2] The magneto rheological fluid according to [1], in which the organic zinc compound is zinc dialkyldithiophosphate.

[3] The magneto rheological fluid according to [1] or [2], in which a content of the organic zinc compound is 1.0% by mass or more and 7.0% by mass or less with respect to a mass of the magneto rheological fluid excluding a mass of the magnetic particles.

[4] The magneto rheological fluid according to any one of [1] to [3], in which a content of the melamine (iso)cyanurate is 0.5% by mass or more with respect to a mass of the magneto rheological fluid excluding a mass of the magnetic

particles.

[5] The magneto rheological fluid according to any one of [1] to [4], further containing a polyester compound (hereinafter, also simply described as a "polyester compound") obtained by condensing components including;

a polyhydric alcohol which is trihydric or higher hydric,
a polyvalent carboxylic acid which is divalent or higher valent, and
one or more selected from the group consisting of a monohydric alcohol and a monovalent carboxylic acid.

[6] The magneto rheological fluid according to any one of [1] to [5], in which the carrier fluid is a silicone-based fluid.
[7] The magneto rheological fluid according to any one of [1] to [5], in which the carrier fluid is a mixture of a poly-alpha-olefin-based fluid and an ester-based fluid.
[8] The magneto rheological fluid according to [7], in which the ester-based fluid is a polyol ester-based fluid.
[9] The magneto rheological fluid according to any one of [1] to [8], further comprising a copper carboxylate.
[10] The magneto rheological fluid according to [9], in which the copper carboxylate is copper oleate.
[11] The magneto rheological fluid according to any one of [1] to [10], further comprising one or more selected from the group consisting of a phenol-based compound and a sulfur-based compound.
[12] The magneto rheological fluid according to [11], in which the phenol-based compound is a hindered phenol-based compound.
[13] The magneto rheological fluid according to [11] or [12], in which the sulfur-based compound is a thioether-based compound.
[14] The magneto rheological fluid according to any one of [1] to [13], further comprising acrylic silicone.
[15] A magneto rheological fluid device comprising the magneto rheological fluid according to any one of [1] to [14].

Effects of Invention

According to the aspect of the present invention, it is possible to provide a magneto rheological fluid having excellent durability. In addition, according to the aspect of the present invention, it is possible to provide a magneto rheological fluid device including such a magneto rheological fluid.

Description of Embodiments

[Magneto rheological fluid]

An aspect of the present invention relates to a magneto rheological fluid containing magnetic particles, a carrier fluid, an organic zinc compound, and melamine (iso)cyanurate.

In the present invention and the present specification, the "organic zinc compound" is an organic compound containing zinc (Zn). In addition, in the present invention and the present specification, the term "melamine (iso)cyanurate" is used to include melamine cyanurate, melamine isocyanurate, and a mixture containing melamine cyanurate and melamine isocyanurate at any ratio. The "melamine cyanurate" is an organic salt of melamine and cyanuric acid, and the "melamine isocyanurate" is an organic salt of melamine and isocyanuric acid. An isomer of cyanuric acid is isocyanuric acid. Diligent studies by the inventors of the present invention revealed newly that the incorporation of both an organic zinc compound and melamine (iso)cyanurate into a magneto rheological fluid contributes to the improvement of the durability of the magneto rheological fluid, which leads to the finding of the above-described viscous magnetic fluid. Regarding this point, the inventors of the present invention conceive that both the organic zinc compound and the melamine (iso)cyanurate contribute to increasing the durability of the magneto rheological fluid. Further, the inventors of the present invention speculate that the reason why the durability of the magneto rheological fluid can be improved by using an organic zinc compound and melamine (iso)cyanurate in combination is that melamine isocyanurate does not promote the decomposition of the organic zinc compound or has a lower action of promoting the decomposition of the organic zinc compound. However, the present invention is not limited by the speculation described in the present specification.

Hereinafter, the magneto rheological fluid will be described in more detail.

<Organic zinc compound>

The magneto rheological fluid can contain an organic zinc compound. As described above, the organic zinc compound can contribute to the improvement of the durability of the magneto rheological fluid. From this point, examples of the preferred organic zinc compound include an organic zinc compound that can function as an extreme pressure agent or a friction modifier (also referred to as an FM agent).

Examples of the more preferred organic zinc compound include zinc dialkyldithiophosphate (ZnDTP). The zinc dialkyldithiophosphate can be a compound represented by General Formula 1 below.

General Formula 1

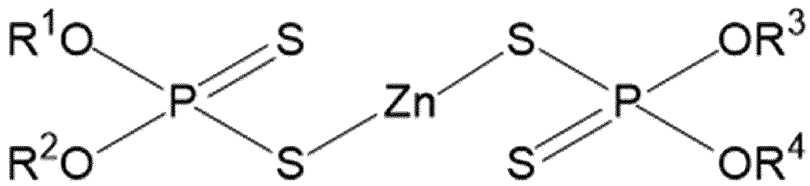

In Formula 1, $R^1$ to $R^4$ each independently represent a hydrocarbon group. The hydrocarbon group is preferably a hydrocarbon group having 1 to 20 carbon atoms. Specific examples of the above-described hydrocarbon group include primary alkyl groups such as a methyl group, an ethyl group, a propyl group, a butyl group, a pentyl group, a hexyl group, a heptyl group, an octyl group, an nonyl group, a decyl group, an undecyl group, a dodecyl group, and a tridecyl group, a tetradecyl group, a pentadecyl group, a hexadecyl group, a heptadecyl group, an octadecyl group, a nonadecyl group, and an icosyl group; secondary alkyl groups such as a secondary propyl group, a secondary butyl group, a secondary pentyl group, a secondary hexyl group, a secondary heptyl group, a secondary octyl group, a secondary nonyl group, a secondary decyl group, a secondary undecyl group, a secondary dodecyl group, a secondary tridecyl group, a secondary tetradecyl group, a secondary pentadecyl group, a secondary hexadecyl group, a secondary heptadecyl group, a secondary octadecyl group, a secondary nonadecyl group, and a secondary icosyl group; tertiary alkyl groups such as a tertiary butyl group, a tertiary pentyl group, a tertiary hexyl group, a tertiary heptyl group, a tertiary octyl group, a tertiary nonyl group, a tertiary decyl group, a tertiary undecyl group, a tertiary dodecyl group, a tertiary tridecyl group, a tertiary tetradecyl group, a tertiary pentadecyl group, a tertiary hexadecyl group, a tertiary heptadecyl group, a tertiary octadecyl group, a tertiary nonadecyl group, and a tertiary icosyl group; branched alkyl groups such as a branched butyl group (an isobutyl group or the like), a branched pentyl group (an isopentyl group or the like), a branched hexyl group (an isohexyl group), a branched heptyl group (an isoheptyl group), a branched octyl group (an isooctyl group, a 2-ethylhexyl group, or the like), a branched nonyl group (an isononyl group or the like), a branched decyl group (an isodecyl group or the like), a branched undecyl group (an isoundecyl group or the like), a branched dodecyl group (an isododecyl group or the like), a branched tridecyl group (an isotridecyl group or the like), a branched tetradecyl group (an isotetradecyl group), a branched pentadecyl group (an isopentadecyl group or the like), a branched hexadecyl group (an isohexadecyl group), a branched heptadecyl group (an isoheptadecyl group or the like), a branched octadecyl group (an isooctadecyl group or the like), a branched nonadecyl group (an isononadecyl group or the like), and a branched icosyl group (an isoicosyl group or the like); aryl groups such as a phenyl group, a toluyl group, a xylyl group, a cumenyl group, a mesityl group, a benzyl group, a phenethyl group, a styryl group, a cinnamyl group, a benzhydryl group, a trityl group, an ethylphenyl group, a propylphenyl group, a butylphenyl group, a pentylphenyl group, a hexylphenyl group, a heptylphenyl group, an octylphenyl group, a nonylphenyl group, a decylphenyl group, an undecylphenyl group, a dodecylphenyl group, a styrylated phenyl group, a p-cumylphenyl group, a phenylphenyl group, and a benzylphenyl group. In General Formula 1, $R^1$ to $R^4$ may be the same or different from each other.

As the organic zinc compound, a commercially available product can be used, or a compound prepared by a known method can also be used. Examples of the commercially available product thereof include the ADEKA KIKU-LUBE series manufactured by ADEKA Corporation. However, the examples thereof are not limited to this.

From the viewpoint of further improving the durability, the content of the organic zinc compound in the magneto rheological fluid is preferably 1.0% by mass or more, more preferably 2.0% by mass or more, and still more preferably 3.0% by mass or more, with respect to the mass of the magneto rheological fluid excluding the mass of the magnetic particles (that is, with respect to 100% by mass of such a mass). In addition, the content of the organic zinc compound in the magneto rheological fluid can be, for example, 10.0% by mass or less, 9.0% by mass or less, 8.0% by mass or less, 7.0% by mass or less, 6.0% by mass or less, or 5.0% by mass or less.

It can be confirmed according to a known analysis method that the magneto rheological fluid contains an organic zinc compound. Examples of the analysis method include infrared spectroscopy, gas chromatography, and a nuclear magnetic resonance method (NMR), which is specifically, $^{13}C$-NMR or $^{31}P$-NMR. As an example, for the specific analysis method, Journal of the Japan Petroleum Institute (J. Japan petrol. Inst., 26, (1), 50 to 56 (1983), JP1997-184832A (JP-H9-184832A), or the like can be referenced.

<Melamine (iso)cyanurate>

The magneto rheological fluid contains melamine (iso)cyanurate together with the organic zinc compound. The melamine (iso)cyanurate can function as, for example, a solid lubricant. As the melamine (iso)cyanurate, a commercially available product can be used, or a compound prepared by a known method can also be used. Examples of the commercially available product thereof include melamine (iso)cyanurate commercially available from Nissan Chemical Corporation, under a product name of "Melamine Cyanurate". However, the examples thereof are not limited to this.

From the viewpoint of further improving the durability, the content of the melamine (iso)cyanurate in the magneto rheological fluid is preferably 0.5% by mass or more, more preferably 0.7% by mass or more, and still more preferably 0.9% by mass or more, with respect to the mass of the magneto rheological fluid excluding the mass of the magnetic particles (that is, with respect to 100% by mass of such a mass). In addition, the content of the melamine (iso)cyanurate in the magneto rheological fluid can be, for example, 5.0% by mass or less, 4.0% by mass or less, 3.0% by mass or less, or 2.0% by mass or less.

<Magnetic particles>

The magneto rheological fluid contains magnetic particles. Examples of the magnetic particles include particles of a magnetic material classified into a normal magnetic, ultra-normal magnetic, or ferromagnetic material, and various magnetic particles that are generally used for a magneto rheological fluid can be used. Specific examples thereof include metal particles containing one or more selected from iron, cobalt, and nickel, and metal compound particles containing one or more selected from iron nitride, iron carbide, carbonyl iron, ferrite, and magnetite. The above-described metal particles can be particles containing a metal component containing one or more selected from iron, cobalt, and nickel, and it can be more specifically particles containing, as a metal component, a metal single body selected from iron, cobalt, and nickel, or an alloy having one or more metal components selected from iron, cobalt, and nickel as constitutional components. The particles containing an alloy may contain a metal component other than iron, cobalt, and nickel, as a constitutional component of the alloy. In this case, it is preferable that one or more selected from iron, cobalt, and nickel are the main components. In addition, it is preferable that the metal compound particles contain, as a main component, one or more selected from iron nitride, iron carbide, carbonyl iron, ferrite, and magnetite. Here, the "main component" means a component having the largest mass proportion among the components constituting the magnetic particles. The magnetic particles may be composed of only the main component.

Among the above-described magnetic particles, magnetic particles containing iron are preferable, and metal compound particles generally called carbonyl iron are more preferable. The carbonyl iron is generally produced by thermal decomposition of iron pentacarbonyl. For example, a commercially available carbonyl iron powder may be used as magnetic particles to prepare the magneto rheological fluid. Examples of the commercially available product thereof include a carbonyl iron powder commercially available from Jiangsu Tianyi Ultra-Fine Metal Powder Co., Ltd. and a carbonyl iron powder commercially available from BASF SE. However, the examples thereof are not limited thereto, and commercially available magnetic particles or magnetic particles prepared by a known method can be used.

The magnetic particles contained in the magneto rheological fluid may be magnetic particles which have been subjected to surface coating with a silane coupling agent or the like or may be magnetic particles which have not been subjected to surface coating.

The average particle diameter of the magnetic particles is preferably 0.05 to 50 $\mu$m, more preferably 0.05 to 40 $\mu$m, and still more preferably 0.1 to 30 $\mu$m, from the viewpoint of providing a magneto rheological fluid that is capable of satisfactorily exhibiting a property of changing the rheology by applying a magnetic field. The average particle diameter of the above-described magnetic particles is an average particle diameter measured according to a laser diffraction scattering method according to JIS Z8825: 2013.

In the present invention and the present specification, the content of the magnetic particles in the magneto rheological fluid is a value calculated by setting the total volume of the magneto rheological fluid to 100% by volume. In addition, the magneto rheological fluid may contain only one kind of magnetic particles or may contain two or more kinds of magnetic particles. In a case where two or more kinds of magnetic particles are contained, the content thereof is the total content of the two or more kinds of magnetic particles. This point also applies to the contents of various components in the present invention and the present specification. From the viewpoint of increasing the output of the magneto rheological fluid device, the magneto rheological fluid preferably contains magnetic particles at a content of 20% by volume or more in terms of the content with respect to the volume of the magneto rheological fluid, where the content of the magnetic particles is more preferably 25% by volume or more and still more preferably 30% by volume or more. On the other hand, the fact that the content of the magnetic particles is low in the magneto rheological fluid can contribute to reducing the viscosity of the magneto rheological fluid. From this point, the content of the magnetic particles in the magneto rheological fluid is preferably 50% by volume or less, more preferably 48% by volume or less, still more preferably 45% by volume or less, and even still more preferably 43% by volume or less.

The content (unit: % by volume) of the magnetic particles in the magneto rheological fluid according to the description of the present invention and the present specification shall be a value determined according to the following method.

A magneto rheological fluid having a volume of Vtotal and a mass of Wtotal is allowed to stand naturally, or the magneto rheological fluid is centrifuged (including ultracentrifugation) to be separated into a solid content and a liquid component. The volume of the separated solid content is denoted by Vm, and the volume of the separated liquid component is denoted by Vl. The mass of the separated solid content is denoted by Wm, and the mass of the separated liquid component is denoted by Wl. Each of Vtotal, Vm, and Vl are determined according to a known volume measuring method. Each of Wtotal, Wm, and Wl is determined according to a known mass measuring method. The solid content includes magnetic particles. Even in a case where the adsorption components are adsorbed on the magnetic particles separated as the solid content, the influence of the adsorption components on the measured values of the volume, the mass, and the true density described below is generally negligible and thus can be ignored. As a result, the Vm shall be regarded as the volume of the magnetic particles, and the Wm is regarded as the mass of the magnetic particles. The relationship of Expression (1) is established among Vm, Vl, and Vtotal. The relationship of Expression (2) is established among Wm, Wl, and Wtotal.

$$\mathrm{Vm} + \mathrm{Vl} = \mathrm{Vtotal} \cdots (1)$$

$$\mathrm{Wm} + \mathrm{Wl} = \mathrm{Wtotal} \cdots (2)$$

In a case of dividing Expression (1) by Vtotal, Expression (3) is obtained.

$$\mathrm{Vm/Vtotal} + \mathrm{Vl/Vtotal} = 1 \cdots (3)$$

Here, assuming that Cm = Vm/Vtotal, Expression (4) is obtained from Expression (3).

$$\mathrm{Vl/Vtotal} = (1 - \mathrm{Cm}) \cdots (4)$$

In addition, the true density of the magneto rheological fluid is denoted by dtotal, the true density of the solid content separated as above is denoted by dm, and the true density of the liquid component separated as above is denoted by dl. Then, the following relationships are established:

$$\mathrm{Wm\ (unit{:}\ kg)} = \mathrm{Vm\ (unit{:}\ m^3)} \times \mathrm{dm\ (unit{:}\ kg/m^3)}$$

$$\mathrm{Wl\ (unit{:}\ kg)} = \mathrm{Vl\ (unit{:}\ m^3)} \times \mathrm{dl\ (unit{:}\ kg/m^3)}$$

$$\mathrm{Wtotal\ (unit{:}\ kg)} = \mathrm{Vtotal\ (unit{:}\ m^3)} \times \mathrm{dtotal\ (unit{:}\ kg/m^3)}$$

As a result, from these relationships, Expression (2) can be rewritten as Expression (2A).

$$\mathrm{Vm} \times \mathrm{dm} + \mathrm{Vl} \times \mathrm{dl} = \mathrm{Vtotal} \times \mathrm{dtotal} \cdots (2A)$$

In a case of dividing Expression (2A) by Vtotal, Expression (5) is obtained.

$$(\mathrm{Vm/Vtotal}) \times \mathrm{dm} + (\mathrm{Vl/Vtotal}) \times \mathrm{dl} = \mathrm{dtotal} \cdots (5)$$

From Expression (5) and Expression (4), Expression (6) is obtained.

$$Cm \times dm + (1 - Cm) \times dl = dtotal \cdots (6)$$

In a case of rearranging Expression (6) with respect to Cm, Expression (7) is obtained.

$$Cm = (dtotal - dl)/(dm - dl) \cdots (7)$$

Cm can be calculated from Expression (7) and the above-described various true densities. The true density dm of the solid content can be obtained according to a known method such as a liquid phase substitution method and a gas phase substitution method. In Examples described later, it is determined by a gas phase substitution method according to JIS Z8807: 2012. The true density dtotal of the magneto rheological fluid and the true density dl of the liquid component can be determined according to a pycnometer method according to JIS K5600-2-4:2014, and in Examples described later, it is determined according to such a method. Using the values of the various true densities obtained in this way, "Cm" is calculated according to Expression (7). The content (unit: % by volume) of the magnetic particles in the magneto rheological fluid is determined as the "calculated Cm × 100".

<Carrier fluid>

In the present invention and the present specification, the "carrier fluid" shall refer to a liquid fluid. The liquid fluid shall refer to a fluid that is in a liquid state in an environment of an ambient temperature of 25°C. As the carrier fluid, various liquid fluids that are generally used for a magneto rheological fluid can be used.

In one form, the magneto rheological fluid can contain a silicone-based fluid as a carrier fluid. In the present invention and the present specification, the "silicone-based fluid" refers to a liquid fluid containing an organic silicon compound having a siloxane bond (Si-O-Si). As the silicone-based fluid, it is possible to use, for example, a commercially available silicone oil. Examples of the commercially available product thereof include a silicone oil manufactured by Shin-Etsu Chemical Co., Ltd. However, the examples thereof are not limited thereto, and various commercially available silicone oils and the like can be used, or a liquid fluid prepared by a known method can also be used.

In addition, in one form, the magneto rheological fluid can contain, as a carrier fluid, a mixture of a poly-alpha-olefin-based fluid and an ester-based fluid. The "poly-alpha-olefin-based fluid" is a liquid fluid containing a polymer of α-olefin. Here, the polymer includes a homopolymer and a copolymer. It is noted that the poly-alpha-olefin is generally referred to as "poly-alpha-olefin (PAO)". As the poly-alpha-olefin-based fluid, it is possible to use a commercially available product thereof or a liquid fluid prepared by a well-known method. Examples of the commercially available product thereof include a poly-alpha-olefin-based fluid commercially available from Chevron Philipps Chemical. However, examples thereof are not limited thereto. In addition, in the present invention and the present specification, the "ester-based fluid" refers to a liquid fluid containing an organic compound having an ester bond. Examples of the preferred form of the ester-based fluid include a polyol ester-based fluid. The "polyol ester-based fluid" is a liquid fluid that contains a polyol compound containing an ester bond. The polyol compound containing an ester bond is also referred to as "polyol ester". Examples of the polyol ester include a neopentyl polyol ester obtained by an esterification reaction between a neopentyl alcohol such as trimethylolpropane, neopentyl glycol, or pentaerythritol, and a fatty acid. As the ester-based fluid and the polyol ester-based fluid, it is possible to use a commercially available product thereof or a liquid fluid prepared by a well-known method. Examples of the commercially available polyol ester-based fluid include a commercially available product from NYCO. However, examples thereof are not limited thereto. It is preferable that the magneto rheological fluid contains a mixture of a poly-alpha-olefin-based fluid and an ester-based fluid as the carrier fluid from the viewpoint of still further improving the durability of the magneto rheological fluid. In the mixture of a poly-alpha-olefin-based fluid and an ester-based fluid, the content of the poly-alpha-olefin-based fluid can be, for example, 70% by mass or more, 80% by mass or more, or 90% by mass or more, and it can be, for example, 99% by mass or less or 95% by mass or less, with respect to 100% by mass of the total mass of the poly-alpha-olefin-based fluid and the ester-based fluid. In addition, In the mixture of a poly-alpha-olefin-based fluid and an ester-based fluid, the content of the ester-based fluid can be, for example, 5% by mass or more, 10% by mass or more, or 15% by mass or more, and it can be, for example, 30% by mass or less, 25% by mass or less, or 20% by mass or less, with respect to 100% by mass of the total mass of the poly-alpha-olefin-based fluid and the ester-based fluid.

Specific examples the carrier fluid also include a natural fatty oil, a mineral oil, a polyphenyl ether, a dibasic acid ester, a phosphoric acid ester, synthetic cycloparaffin and synthetic paraffin, a synthetic unsaturated hydrocarbon oil, a monobasic acid ester, a dibasic acid ester, a glycol ester, a glycol ether, a silicic acid ester, a silicone copolymer, a synthetic hydrocarbon, polybutene, an alkyl benzene, a polyglycol ester, polyethylene propylene, and a mixtures of two or more thereof. In addition, liquid paraffin called white oil, or a liquid fluid commercially available as hydraulic oil or transformer oil can also be used. Vegetable oil such as soybean oil, rapeseed oil, or palm oil can also be used.

From the viewpoint of reducing the viscosity of the magneto rheological fluid, the content of the carrier fluid in the magneto rheological fluid is preferably 50% by volume or more and more preferably 52% by volume or more in terms of the content with respect to the volume of the magneto rheological fluid (that is, with respect to 100% by volume of the total volume of the magneto rheological fluid). In addition, from the viewpoint of increasing the output of the magneto rheological fluid device, the content of the carrier fluid is preferably 80% by volume or less and more preferably 70% by volume or less.

<Other components>

The magneto rheological fluid can also contain only the above-described various components or can also contain one or more kinds of other components in addition to the above-described components. Hereinafter, various components that may be contained in the magneto rheological fluid will be described.

(Polyester compound)

In one form, the magneto rheological fluid can contain one or two or more kinds of polyester compounds obtained by condensing components including a polyhydric alcohol which is trihydric or higher hydric, a polyvalent carboxylic acid which is divalent or higher valent, and one or more selected from the group consisting of a monohydric alcohol and a monovalent carboxylic acid. It is preferable to contain such a polyester compound from the viewpoint of further improving the durability of the magneto rheological fluid. Regarding the reason for this, the inventors of the present invention speculate that the polyester compound can suppress the collision between the magnetic particles, and as a result, the generation of radicals is suppressed. However, this is the speculation and thus does not limit the present invention.

Hereinafter, a polyhydric alcohol which is trihydric or higher hydric is referred to as a "component a1", a polyvalent carboxylic acid which is divalent or higher valent is referred to as a "component a2", a monohydric alcohol is referred to as a "component a3", and a monovalent carboxylic acid is referred to as a "component a4". Hereinafter, these components will be further described.

Component a1 (polyhydric alcohol which is trihydric or higher hydric)

The component a1 is a polyhydric alcohol which is trihydric or higher hydric, that is, a compound having three or more hydroxy groups in one molecule. The component a1 can be a compound containing three or more alcoholic hydroxy groups and/or phenolic hydroxy groups in one molecule, and it is preferably a compound containing three or more alcoholic hydroxy groups in one molecule and more preferably a compound having three to six alcoholic hydroxy groups in one molecule. In the present invention and the present specification, the "phenolic hydroxy group" refers to a hydroxy group directly bonded to an aromatic ring, and the "alcoholic hydroxy group" refers to a hydroxy group other than the phenolic hydroxy group.

Examples of the preferred form of the component a1 include an alcohol represented by General Formula (a1-1a).

General Formula (a1-1a)

$$Z\!\left(OH\right)_{m1}$$

In General Formula (a1-1a), Z represents an m1-valent linking group, and m1 represents an integer of 3 or more.

The alcohol represented by General Formula (a1-1a) is an m1-hydric alcohol. In General Formula (a1-1a), Z is an m1-valent linking group. In other words, Z can be said to be a polyhydric alcohol mother nucleus that is formed by removing m1 pieces of hydroxy groups from an m1-hydric alcohol.

The linking group represented by Z can be an m1-valent linking group containing one or more trivalent or higher valent linking groups. Examples of the trivalent or higher valent linking group include a trivalent linking group containing a tertiary carbon atom, and a quaternary carbon atom.

The trivalent linking group containing a tertiary carbon atom is preferably a linking group having the following structure. In the following structure, $R^c$ represents a hydrogen atom or a substituent. In addition, * represents a bonding position for bonding to an adjacent structure. This point also applies to the structure described later.

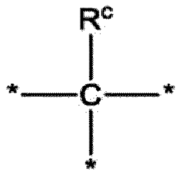

A quaternary carbon atom can be represented by the following structure.

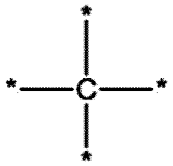

Z preferably has a structure in which an alkylene group, an arylene group, or a plurality of these groups are bonded by a single bond, or a structure in which an alkylene group, an arylene group, or a plurality of these groups are bonded by a divalent linking group (preferably -O-, -C(=)O-, -OC(=)O-, -S-, $-SO_2-$, -C(=O)-, $-C(=O)NR^b-$) or a trivalent or higher valent linking group. Here, $R^b$ represents a hydrogen atom, an alkyl group, or an aryl group. It is noted that Z may have another substituent. Among the above, Z is preferably a residue obtained by removing a hydroxy group from the preferred examples of the polyhydric alcohol which is trihydric or higher hydric, which will be described later.

m1 is an integer of 3 or more, and it is preferably an integer in a range of 3 to 6 and is more preferably 3 or 4.

Specific examples of the component a1 include the following polyhydric alcohol which is trihydric or higher hydric.

Trihyhdric alcohols such as glycerin, 1,2,3-butanetriol, 1,2,4-butanetriol, 1,2,3-pentanetriol, 1,2,4-pentanetriol, 2-methyl-1,2,3-propanetriol, 2-methyl-2,3,4-butanetriol, 2-ethyl-1,2,3-butanetriol, 2,3,4-pentanetriol, 3-methylpentane-1,3,5-triol, 2,4-dimethyl-2,3,4-pentanetriol, 2,3,4-hexanetriol, 4-propyl-3,4,5-heptanetriol, 1,3,5-cyclohexanetriol, pentamethyl glycerin, trimethylol ethane, and trimethylolpropane;

tetrahydric alcohols such as 1,2,3,4-butane tetraol, pentaerythritol, diglycerin, sorbitan, ribose, arabinose, xylose, lyxose, ditrimethylolethane, and ditrimethylolpropane;
pentahydric alcohols such as arabitol, xylitol, glucose, fructose, galactose, mannose, allose, gulose, idose, and talose;
hexahydric alcohols such as dipentaerythritol, sorbitol, galactitol, mannitol, allitol, iditol, talitol, inositol, and quercitol; and
octahydric alcohols such as tripentaerythritol.

Among these, trimethylolethane, trimethylolpropane, glycerol, pentaerythritol, ditrimethylolethane, ditrimethylolpropane, dipentaerythritol, and tripentaerythritol are preferable, and trimethylolpropane, trimethylolethane, ditrimethylolpropane, glycerol, pentaerythritol, and dipentaerythritol are more preferable.

Examples of the component a1 also include a compound having an oxyalkylene structure. Examples of the compound having such an oxyalkylene structure include a compound obtained by adding an alkylene oxide to at least one of the hydroxy groups contained in the above-described polyhydric alcohol which is trihydric or higher hydric. The alkylene oxide is preferably ethylene oxide, propylene oxide, butylene oxide, or a combination of a plurality of these oxides, and more preferably ethylene oxide or propylene oxide. The compound having an oxyalkylene structure is preferably a compound obtained by adding the same or different alkylene oxide to all the hydroxy groups contained in the polyhydric alcohol which is trihydric or higher hydric. The number of oxyalkylene structures (that is, alkylene oxides) contained in the compound having an oxyalkylene structure is, on average, preferably 1 to 200 and more preferably 1 to 100. The number of alkylene oxides to be added is, on average, more preferably 1 to 20 times, still more preferably 2 to 10 times, and even still more preferably 3 to 7 times the number of hydroxy groups of the component a1.

The component a1 having an oxyalkylene structure, which is a polyhydric alcohol which is trihydric or higher hydric, is preferably a compound represented by General Formula (a1-1b).

General Formula (a1-1b)

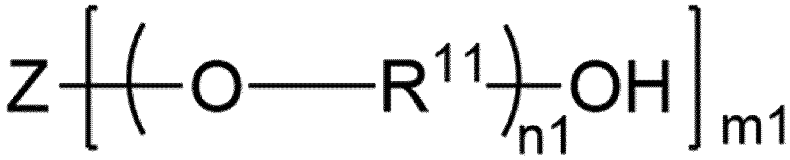

In General Formula (a1-1b), Z represents an m1-valent linking group, m1 represents an integer of 3 or more, $R^{11}$ represents an alkylene group, and n1 represents an integer in a range of 1 to 100.

Z and m1 in General Formula (a1-1b) respectively have the same meanings as Z and m1 in General Formula (a1-1a). The preferred Z is a residue obtained by removing a hydroxy group from the above-described preferred examples of the polyhydric alcohol which is trihydric or higher hydric.

$R^{11}$ is an alkylene group, preferably an ethylene group, a propylene group, or a butylene group, and more preferably an ethylene group or a propylene group. In General Formula (a1-1b), a plurality of $R^{11}$'s may be the same or different from each other.

n1 is an integer in a range of 1 to 100, and it is preferably an integer in a range of 1 to 20, more preferably an integer in a range of 2 to 10, and still more preferably an integer in a range of 3 to 7. A plurality of n1's in General Formula (a1-1b) may be the same or different from each other.

Specific examples of the component a1 are shown below. However, the present invention is not limited to the following specific examples.

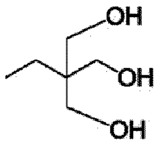

a1-a

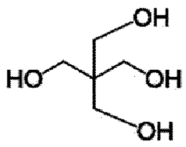

a1-b

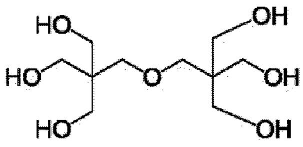

a1-c

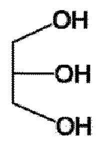

a1-d

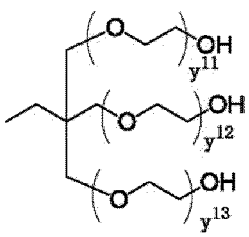

a1-e

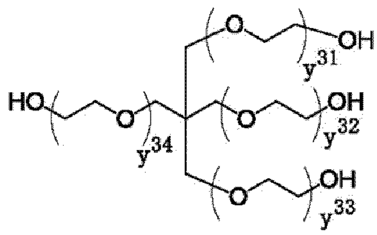

a1-f

In the compound a1-e, $y^{11}$ to $y^{13}$ each independently represent an integer of 0 or more, at least one thereof represents an integer of 1 or more, and the average value thereof is in a range of 1 to 10. In the compound a1-e in Table 1 which will be described later, the average value of $y^{11}$ to $y^{13}$ is 3.

In the compound a1-f, $y^{31}$ to $y^{34}$ each independently represent an integer of 0 or more, at least one thereof represents an integer of 1 or more, and the average value of the integers is in a range of 1 to 10.

Component a2 (polyvalent carboxylic acid which is divalent or higher valent)

The component a2 is a polyvalent carboxylic acid which is divalent or higher valent. Specifically, the component a2 is a compound having two or more carboxy groups and/or carboxylic acid precursor structures in one molecule. Here, the "carboxylic acid precursor structure" refers to a structure that reacts with the polyhydric alcohol (the component a1) which is trivalent or higher valent or a monohydric alcohol (a component a3 which will be described in detail later), thereby capable of forming an ester bond. Examples of the carboxylic acid precursor include a carboxylic acid halide, a carboxylic acid ester (preferably a methyl ester or an ethyl ester), a carboxylic acid anhydride, and a mixed anhydride of a carboxylic acid and another acid (preferably a sulfonic acid such as methanesulfonic acid or toluenesulfonic acid,

a substituted carboxylic acid such as trifluoroacetic acid, or the like). In the following description of the carboxy group, the carboxy group shall also include a carboxylic acid precursor structure. The component a2 is a compound having preferably 2 to 4 carboxy groups, more preferably 2 or 3 carboxy groups, and still more preferably 2 carboxy groups.

The two or more carboxy groups contained in the component a2 are preferably linked by a chain or cyclic aliphatic hydrocarbon which is divalent or higher valent or an aromatic hydrocarbon. Among the carbon atoms in the aliphatic hydrocarbon or aromatic hydrocarbon linking group, one or more carbon atoms which are not adjacent to each other may be substituted with an oxygen atom. In addition, the aliphatic hydrocarbon or the aromatic hydrocarbon linking group may have a substituent, and in this case, the substituent is preferably a halogen atom, an alkyl group, or an alkenyl group, and more preferably an alkyl group.

The component a2 preferably has 4 or more carbon atoms, more preferably has 10 or more carbon atoms, still more preferably has 18 or more carbon atoms, even more preferably has 22 or more carbon atoms, even still more preferably has 26 or more carbon atoms, and even further still more preferably has 36 or more carbon atoms. In addition, the component a2 preferably has 70 or less carbon atoms, more preferably has 66 or less carbon atoms, and still more preferably has 59 or less carbon atoms. It is noted that in the present invention, the number of carbon atoms of the component a2 shall refer to the number of carbon atoms including the carbon atoms constituting the carboxy group.

Specific examples of the component a2 include terephthalic acid, phthalic acid, malonic acid, succinic acid, glutaric acid, adipic acid, suberic acid, azelaic acid, sebacic acid, dodecanedioic acid, trimellitic acid, a dimer acid (for example, a dimer of an unsaturated carboxylic acid having 18 carbon atoms) as well as a hydrogenated product of a dimer acid, a trimer acid (for example, a trimer of an unsaturated carboxylic acid having 18 carbon atoms), and a dimer of an unsaturated carboxylic acid having 22 carbon atoms a body (for example, an erucic acid dimer). Hereinafter, the dimer of the unsaturated carboxylic acid having 22 carbon atoms is also described as a "C22 unsaturated carboxylic acid dimer". Among the above, it is preferable to use a dimer acid, a hydrogenated product of dimer acid, a trimer acid, and/or a C22 unsaturated carboxylic acid dimer, and it is more preferable to use a dimer acid, a hydrogenated product of a dimer acid, and/or a C22 unsaturated carboxylic acid dimer, and it is still more preferable to use a dimer acid.

In the present invention and the present specification, the "dimer acid" refers to an acid containing, as a component, an aliphatic dicarboxylic acid and/or an alicyclic dicarboxylic acid (hereinafter, also referred to as a "dicarboxylic acid component"), which is generated by dimerization of an unsaturated fatty acid (generally, having 18 carbon atoms) by polymerization, Diels-Alder reaction, or the like. Here, the dimer acid generally contains several % by mole to several tens of % by mole of a trimer, a monomer, and the like. The content of the dicarboxylic acid component in the dimer acid is preferably 75% by mass or more, more preferably 80% by mass or more, still more preferably 90% by mass or more, and even still more preferably 95% by mass or more. In addition, an acid in which the main component is a trimer that is generated by trimerization of an unsaturated fatty acid (generally, having 18 carbon atoms) by polymerization, Diels-Alder reaction, or the like is "trimer acid", where the trimer acid generally contains several % by mole to several tens of % by mole of a dimer, a monomer, and the like.

The "main component" described above regarding the dimer acid and the trimer acid refers to a component contained most abundantly in terms of mass.

Specific examples of the dimer acid include TSUNODIME (registered trade name) 205, 216, 228, 395, manufactured by TSUNO CO., LTD., and specific examples of the trimer acid include TSUNODIME (registered trade name) 345, manufactured by TSUNO CO., LTD. As the dimer acid or the trimer acid, it is also possible to use others such as a commercially available product manufactured by Cognis or a commercially available product manufactured by Uniqema.

Specific examples of the component a2 are shown below. However, the present invention is not limited to the following specific examples.

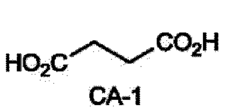
CA-1

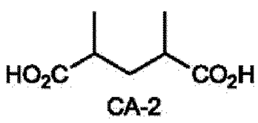
CA-2

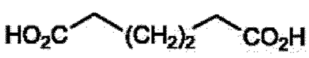
CA-3

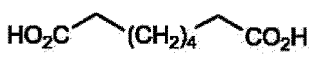
CA-4

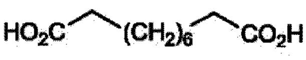
CA-5

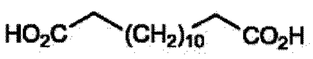
CA-6

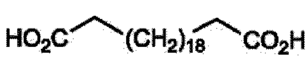
CA-7

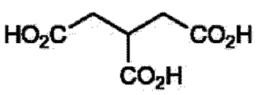
CA-8

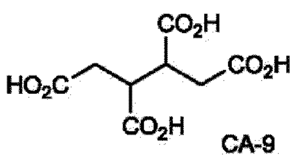
CA-9

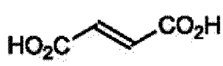
CA-10

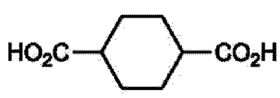
CA-11

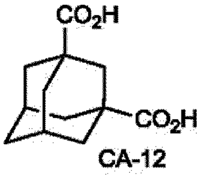
CA-12

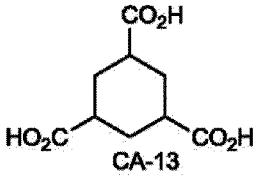
CA-13

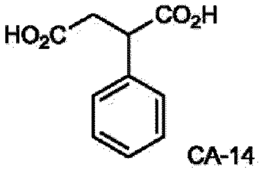
CA-14

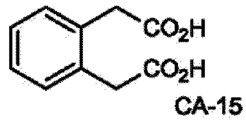
CA-15

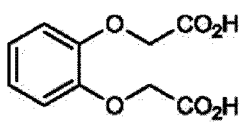
CA-16

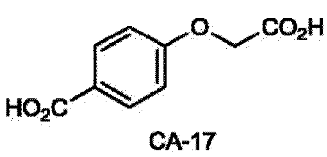
CA-17

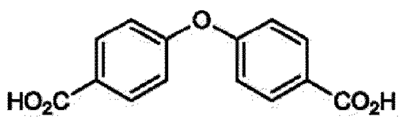
CA-18

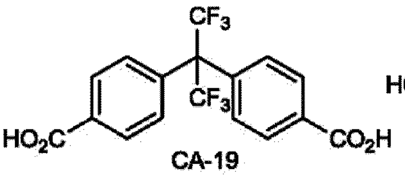
CA-19

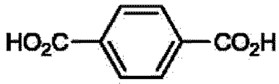
CA-20

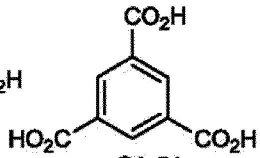
CA-21

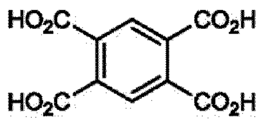
CA-22

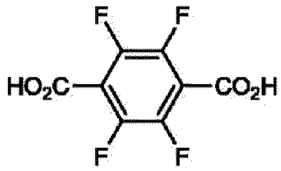
CA-23

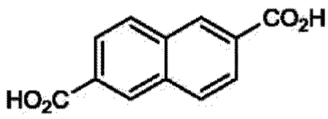
CA-24

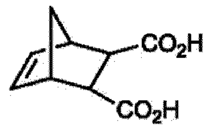
CA-25

$C_{34}H_{62}(COOH)_2$
CA-26: Dimer acid

$C_{51}H_{93}(COOH)_3$
CA-27: Trimer acid

$C_{42}H_{82}(COOH)_2$
CA-28: C22 unsaturated carboxylic acid dimer

Component a3 (monohydric alcohol)

The component a3 is a monohydric alcohol, that is, a compound containing one hydroxy group in one molecule. The component a3 can be represented by R-OH. R is a monovalent organic group, and it is preferably an aliphatic, alicyclic, or aromatic ring group which is monovalent. In the carbon atoms in R, one or more carbon atoms which are not adjacent to each other may be substituted with an oxygen atom. In addition, R may have a substituent, and a hydrogen atom in R may be substituted with a halogen atom. It suffices that R has 1 or more carbon atoms, where R preferably has 4 or more carbon atoms, more preferably has 6 or more carbon atoms, still more preferably has 8 or more carbon atoms, and even still more preferably has 10 or more carbon atoms.

The component a3 preferably has an alkyl group having a branched structure and/or an oxyalkylene structure.

The component a3 is preferably a component that contains one or more selected from the group consisting of an alkyl group having 10 or more carbon atoms, an alkyl group having a branched structure, and an oxyalkylene structure, and it is more preferably a component which has an alkyl group having a branched structure and having 10 or more carbon atoms and in which one or more carbon atoms which are not adjacent to each other are substituted with an oxygen atom (that is, an oxyalkylene structure is provided).

Specific examples of the component a3 include methanol, ethanol, butanol, isobutanol, pentanol, propanol, hexanol, 2-ethylhexanol, heptanol, octanol, decanol, dodecanol, hexadecanol, octadecanol, 2-heptyl undecanol, eicosadecanol, phytosterol, isostearyl alcohol, stearol, cetol, behenol, and alkylene oxide adducts of these monohydric alcohols.

The component a3 is preferably a monohydric alcohol having an oxyalkylene structure and is more preferably a monohydric alcohol represented by General Formula 3.

General Formula 3

$$R^a\left(O(CX^{a1}X^{a2})_{na1}\right)_{na2}OH$$

In General Formula 3, $R^a$ represents an alkyl group which may have a substituent, a cycloalkyl group which may have a substituent, an alkenyl group which may have a substituent, an aryl group which may have a substituent, or a heteroaryl group which may have a substituent, and $X^{a1}$ and $X^{a2}$ each independently represent a hydrogen atom, a halogen atom, or an alkyl group. na1 represents an integer in a range of 2 to 4, and na2 represents an integer in a range of 1 to 20. A plurality of $X^{a1}$'s in General Formula 3 may be the same or different from each other, and a plurality of $X^{a2}$'s may be the same or different from each other. In addition, in a case where na2 is 2 or more, a plurality of pieces of "$-O(CX^{a1}X^{a2})_{na1}-$" in General Formula 3 may be the same or different from each other.

In a case where $R^a$ is an alkyl group which may have a substituent, the alkyl group moiety preferably has carbon atoms in a range of 2 to 25, more preferably has carbon atoms in a range of 4 to 22, still more preferably has carbon atoms in a range of 6 to 20, and even still more preferably has carbon atoms in a range of 8 to 18. The alkyl group represented by $R^a$ may be linear or branched, and it is preferably branched. In addition, $R^a$ may be a cycloalkyl group which may have a substituent.

In a case where $R^a$ is an alkenyl group which may have a substituent, the alkenyl group moiety preferably has carbon atoms in a range of 3 to 22, more preferably has carbon atoms in a range of 4 to 18, and still more preferably has carbon atoms in a range of 8 to 18. The alkenyl group represented by $R^a$ may be linear, may be branched, or may be cyclic.

In a case where $R^a$ is an aryl group which may have a substituent or a heteroaryl group which may have a substituent, the aryl group moiety or the heteroaryl group moiety preferably has carbon atoms in a range of 6 to 17 and more preferably has carbon atoms in a range of 6 to 12. Examples of the aryl group represented by $R^a$ include a phenyl group and a naphthyl group, where a phenyl group is preferable. In addition, examples of the heteroaryl group represented by $R^a$ include an imidazolyl group, a pyridyl group, a quinolyl group, a furyl group, a thienyl group, a benzoxazolyl group, an indolyl group, a benzimidazolyl group, a benzthiazolyl group, a carbazolyl group, and an azepinyl group. The heteroatom contained in the heteroaryl group is preferably one or more heteroatoms selected from the group consisting of an oxygen atom, a sulfur atom, and a nitrogen atom, and it is more preferably an oxygen atom.

In General Formula 3, $R^a$ is more preferably an alkyl group which may have a substituent.

Examples of the substituent which may be contained in $R^a$ include the following substituents.

A substituted or unsubstituted alkyl group having 1 to 50 carbon atoms (for example, a methyl group, an ethyl group, or any linear or branched group of a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an eicosyl group, a heneicosyl group, a docosyl group, a tricosyl group, or a tetracosyl group);

an alkenyl group having 2 to 35 carbon atoms (for example, a propenyl group, a butenyl group, a pentenyl group, a hexenyl group, a heptenyl group, an octenyl group, a nonenyl group, a decenyl group, an undecenyl group, or a dodecenyl group);

a cycloalkyl group having 3 to 10 carbon atoms (for example, a cyclopropyl group, a cyclobutyl group, a cyclopentyl group, a cyclohexyl group, or a cycloheptyl group);

an aromatic ring group having 6 to 30 carbon atoms (for example, a phenyl group, a naphthyl group, a biphenyl group, a phenanthryl group, or an anthracenyl group);

a heterocyclic group (which is preferably a residue of a heterocyclic ring containing at least one heteroatom selected from the group consisting of a nitrogen atom, an oxygen atom, and a sulfur atom, examples of which include a pyridyl group, a pyrimidyl group, a triazinyl group, a thienyl group, a furyl group, a pyrrolyl group, a pyrazolyl group, an imidazolyl group, a triazolyl group, a thiazolyl group, an imidazolyl group, an oxazolyl group, a thiadiallyl group, an oxadiazolyl group, a quinolyl group, and an isoquinolyl group); or

a group consisting of a combination of two or more substituents described above. These substituents may further have one or more substituents in a case of being allowed, and examples of such a substituent include an alkoxy group, an alkoxycarbonyl group, a halogen atom, a silicon atom, an ether group, an alkylcarbonyl group, a cyano group, a thioether group, a sulfoxide group, a sulfonyl group, and an amide group.

In General Formula 3, $X^{a1}$ and $X^{a2}$ each independently represent a hydrogen atom, a halogen atom, or an alkyl group, and $X^{a1}$ and $X^{a2}$ are preferably a hydrogen atom or an alkyl group. The preferred form of the alkyl group represented by $X^{a1}$ and $X^{a2}$ is the same as the preferred form of the alkyl group moiety of the alkyl group represented by $R^a$, which may have a substituent.

In General Formula 3, na1 represents an integer in a range of 2 to 4, and it is preferably 2 or 3 and more preferably 2.

In addition, na2 represents an integer in a range of 1 to 20, and it is preferably an integer in a range of 1 to 15, more preferably an integer in a range of 1 to 10, and still more preferably an integer in a range of 1 to 7.

Specific examples of the component a3 are shown below. However, the present invention is not limited to the following specific examples.

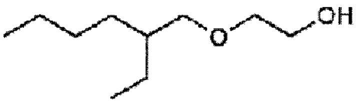
MA-1

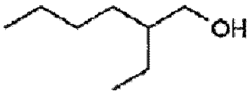
MA-2

$C_{18}H_{37}(OCH_2CH_2)_4OH$
MA-3

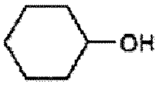
MA-4

$CH_3CH_2OH$
MA-5

$CH_3(CH_2)_2OH$
MA-6

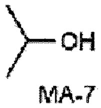
MA-7

$CH_3(CH_2)_3OH$
MA-8

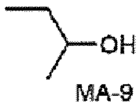
MA-9

$CH_3(CH_2)_9OH$
MA-10

$CH_3(CH_2)_{11}OH$
MA-11

$CH_3(CH_2)_{13}OH$
MA-12

$CH_3(CH_2)_{15}OH$
MA-13

$CH_3(CH_2)_{17}OH$
MA-14

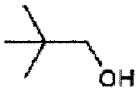
MA-15

$CH_3(OC_2H_4)_2OH$
MA-16

$C_2H_5(OC_2H_4)_3OH$
MA-17

$C_4H_9(OC_3H_6)_3OH$
MA-18

$CH_3(OC_2H_4)_8OH$
MA-19

$C_2H_5(OC_4H_8)_5OH$
MA-20

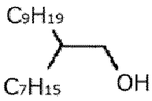
MA-21

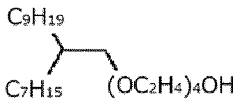
MA-22

$(CH_3)_3Si\{OSi(CH_3)_2\}_4(OC_2H_4)_4OH$
MA-23

$C_6F_{13}CH_2CH_2OH$
MA-24

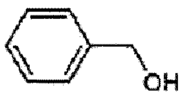
MA-25

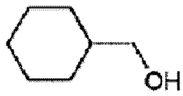
MA-26

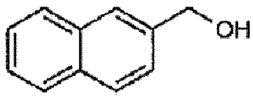
MA-27

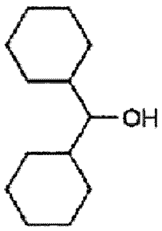
MA-28

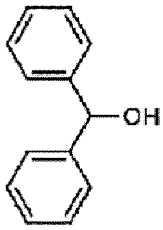
MA-29

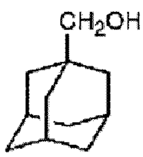
MA-30

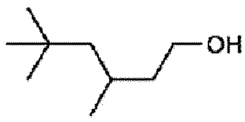
MA-31

$CH_3OH$
MA-32

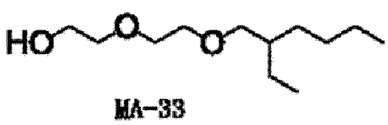

MA-33

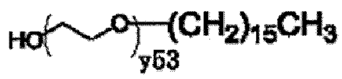

MA-34

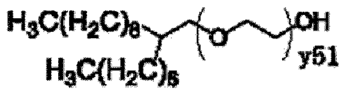

MA-35

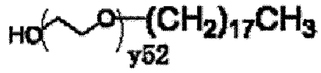

MA-36

In the compound MA-34, the average value of y53 is 4, in the compound MA-35, the average value of y51 is 10, and in the compound MA-36, the average value of y52 is 20.

Component a4 (monovalent carboxylic acid)

The component a4 is a monovalent carboxylic acid. Specifically, the component a4 is a compound having one carboxy group or carboxylic acid precursor structure in one molecule. Regarding the carboxylic acid precursor structure, the description regarding the component a4 described above can be referenced. The carboxylic acid involved in the component a4 includes an aliphatic carboxylic acid, an aromatic carboxylic acid, and a carboxylic acid precursor thereof. The component a4 is preferably an aliphatic carboxylic acid and a carboxylic acid precursor thereof. The component a4 preferably has 5 or more carbon atoms, more preferably has 8 or more carbon atoms, and still more preferably has 9 or more carbon atoms. It is noted that the number of carbon atoms of the component a4 shall refer to the number of carbon atoms including the carbon atoms constituting the carboxy group or the carboxylic acid precursor structure.

The component a4 preferably contains an alkyl group having a branched structure. Examples of the more preferred component a4 include an aliphatic monovalent carboxylic acid having 9 or more carbon atoms and containing an alkyl group having a branched structure and an aliphatic monovalent carboxylic acid containing an alkyl group that has a linear or branched structure having 13 or more carbon atoms.

Specific examples of the component a4 include monovalent carboxylic acids having a linear alkyl group, such as butanoic acid, pentanoic acid, hexanoic acid, heptanoic acid, octanoic acid, decanoic acid, stearic acid, dodecanoic acid, lauric acid, tetradecanoic acid, and behenic acid, monovalent carboxylic acids containing an alkyl group having a branched structure, such as 2,3,4,8,10,10-hexamethylundecane-5-carboxylic acid, 2-ethylhexanoic acid, and 2-heptylundecanoic acid (isostearic acid), and unsaturated fatty acids such as oleic acid, linoleic acid, erucic acid, and a monomer acid. Among them, stearic acid, 2-ethylhexanoic acid, 2-heptylundecanoic acid (isostearic acid), and oleic acid are preferable, and 2-heptylundecanoic acid (isostearic acid) and oleic acid are more preferable.

Synthesis method for polyester compound

The polyester compound is a polyester compound obtained by condensing components including the component a1, the component a2, and one or more selected from the group consisting of the component a3 and the component a4, and it can be a polyester compound obtained by condensing the component a1, the component a2, and one or more selected from the group consisting of the component a3 and the component a4. As the component a1, it is possible to use one or two or more kinds of polyhydric alcohols which is trihydric or higher hydric. The same applies to the component a2, the component a3, and the component a4.

Regarding a preparation ratio in a case of carrying out a condensation reaction for obtaining the above-described polyester compound, the above-described components are condensed at a molar ratio of 2/1 to 1/2, where the molar ratio is "carboxy group/hydroxy group" of the total carboxylic acid and the total alcohol, and the molar ratio is more preferably 1.5/1 to 1/1.5, still more preferably 1.3/1 to 1/1.3, and even still more preferably 1.2/1 to 1/1.2.

A ratio of "component a2/component a4" in the total carboxylic acid is preferably 1/0 to 1/20 in terms of the molar ratio of the carboxy group. In a case where the component a3 is not used in the condensation reaction, the ratio of "component a2/component a4" is preferably 1.5/1 to 1/10, and it is more preferably 1/1 to 1/5 in terms of the molar ratio of the carboxy group.

A ratio of "component a1/component a3" in the total alcohol is preferably 1/0 to 1/20 in terms of the molar ratio of the hydroxy group. In a case where the component a4 is not used in the condensation reaction, the ratio of "component a1/component a3" is preferably 1.5/1 to 1/10, and it is more preferably 1.5/1 to 1/2 in terms of the molar ratio of the hydroxy group.

One or both of the component a3 and the component a4 is used in the condensation reaction for obtaining the

above-described polyester compound.

The polyester compound can be obtained by condensing a mixture containing the component a1, the component a2, and one or more selected from the group consisting of the component a3 and the component a4, in the presence of a catalyst or a condensing agent or without a catalyst. During the condensation reaction, it is preferable to carry out heating in the absence of a solvent or the presence of a solvent, and it is more preferable to carry out the condensation reaction in the absence of a solvent. In a case of using a solvent, it is preferable that an appropriate amount of a solvent azeotropic with water or an alcohol (preferably, an alcohol having a relatively small molecular weight) is allowed to be present. This point is preferable for suppressing the coloration of the product and causing the reaction to proceed smoothly. In a case of using a solvent, the solvent is preferably a hydrocarbon-based solvent having a boiling point of 100°C to 200°C, more preferably a hydrocarbon-based solvent having a boiling point of 100°C to 170°C, and still more preferably a hydrocarbon-based solvent having a boiling point of 110°C to 160°C. Specific examples of the solvent include toluene, xylene, and mesitylene. The adding amount of the solvent is preferably 1% to 25% by mass, more preferably 2% to 20% by mass, still more preferably 3% to 15% by mass, and even still more preferably 5% to 12% by mass, with respect to the total mass of the charged mixture. In a case of setting the adding amount of the solvent within the above-described range, the azeotropic reaction and the condensation reaction can be allowed to proceed smoothly.

The reaction can be accelerated by using a catalyst. On the other hand, it is preferable not to use a catalyst since the post-treatment for removing the catalyst is complicated and may cause the coloration of the product. In a case of using a catalyst, the catalyst to be used is not particularly limited, and a known catalyst can be used. For the catalyst, for example, JP2001-501989A, JP2001-500549A, JP2001-507334A, and JP2002-509563A can be referenced.

After completion of the charging, the reaction can be carried out at a temperature of the mixture of, for example, 120°C to 250°C, preferably 130°C to 230°C, more preferably 150°C to 230°C, and still more preferably 170°C to 230°C. This makes it possible for a solvent including water or an alcohol to be allowed to be azeotropic. In a case of being allowed to be azeotropic, the solvent is cooled at a cooling portion of the reaction device and can be separated as a liquid. Regarding the reaction temperature, the reaction may be carried out at a lower temperature and then further carried out at a higher temperature.

Regarding the reaction time, since a theoretical amount of water to be generated can be calculated from the number of moles of the charged substance, the reaction can be carried out until a moment when the theoretical amount of water to be generated is obtained. Alternatively, the reaction may be completed at a moment when the theoretical amount of water to be generated is 60% to 90%. The reaction time is, for example, 1 to 24 hours, preferably 3 to 18 hours, more preferably 5 to 18 hours, and still more preferably 6 to 15 hours.

The kinematic viscosity of the polyester compound at 40°C is preferably 50 to 5,000 $mm^2$/sec. The kinematic viscosity of the polyester compound at 40°C is preferably 50 $mm^2$/sec or more, more preferably 70 $mm^2$/sec or more, and still more preferably 100 $mm^2$/sec or more. In addition, the kinematic viscosity of the polyester compound at 40°C is preferably 5,000 $mm^2$/sec or less, more preferably 3,000 $mm^2$/sec or less, and still more preferably 2,000 $mm^2$/sec or less. The kinematic viscosity at 40°C is a value measured in a constant-temperature water bath at a liquid temperature of 40.0°C using an Ubbelohde viscometer.

The weight-average molecular weight of the polyester compound is preferably in a range of 800 to 100,000, more preferably in a range of 1,000 to 20,000, and still more preferably in a range of 1,200 to 10,000 in terms of the weight-average molecular weight in terms of standard polystyrene, which is measured according to gel permeation chromatography (GPC). Specifically, the weight-average molecular weight of the polyester compound in terms of polystyrene is a value measured under the following conditions.

As gel permeation chromatography (GPC), "HLC-8220GPC (manufactured by Tosoh Corporation)" is used, and as a column, the following three columns are used: "TSKgel, Super HZM-H (manufactured by Tosoh Corporation, 4.6 mm ID (inner diameter) × 15 cm)", "TSKgel, Super HZ4000 (manufactured by Tosoh Corporation, 4.6 mm ID × 15 cm)", and "TSKgel, Super HZ2000 (manufactured by Tosoh Corporation, 4.6 mm ID × 15 cm)".

As the conditions for GPC, it is possible to adopt, for example, the following conditions.

Eluent: Tetrahydrofuran (THF)
Flow Rate: 0.35 ml/min
Measurement temperature: 40°C (column, inlet)
Detector: Refractive index detector
Analysis time: 20 minutes
Specimen concentration: 0.1% by mass
Sample injection amount: 10 μl

An unreacted carboxy group and/or hydroxy group may remain in the polyester compound. In a case where a carboxy group and/or a hydroxy group remains, the ydroxyl number and the acid value are increased. In such a case, acylation and/or an esterification treatment is separately carried out to eliminate the carboxy group and/or the hydroxy

group, thereby being capable of lowering the ydroxyl number and the acid value. The ydroxyl number of the polyester compound is preferably 50 mgKOH/g or less, more preferably 40 mgKOH/g or less, and still more preferably 30 mgKOH/g or less. The ydroxyl number is the number in terms of mg of potassium hydroxide equivalent to the hydroxy group in 1 g of a sample. The ydroxyl number of the polyester compound is a value measured according to JIS K 0070:1992.

In addition, the acid value (the number in terms of mg of potassium hydroxide required to neutralize 1 g of a sample) of the polyester compound is not particularly limited. In one form, the acid value of the polyester compound is preferably in a range of 0 to 100 mgKOH/g, more preferably in a range of 0 to 50 mgKOH/g, still more preferably in a range of 1 to 30 mgKOH/g, and even still more preferably in a range of 3 to 30 mgKOH/g. The acid value of the polyester compound is a value measured according to JIS K 2501:2003.

After the condensation reaction and the treatment after the condensation reaction is completed, it is preferable to carry out filtration to remove dust. It is noted that in a case where the product is a solid, it can be taken out by being melted or can be taken out as a powder by reprecipitation.

Preferred specific examples of the polyester compound include those obtained by condensing the components shown in Table 1 below. In Table 1, the functional group equivalent ratio is an equivalent ratio for a carboxy group or a hydroxy group.

[Table 1]

| Ester compound | Component a1 | | Component a2 | | Component a3 | | Component a4 | | Weight-average molecular weight | Acid value (mgKOH/g) |
|---|---|---|---|---|---|---|---|---|---|---|
| | Kind | Functional group equivalent ratio | Kind | Functional group equivalent ratio | Kind | Functional group equivalent ratio | Kind | Functional group equivalent ratio | | |
| A-1 | a1-a | 3.5 | CA-26 | 6 | MA-1 | 3.5 | - | - | 4900 | 6.3 |
| A-2 | a1-a | 3 | CA-26 | 6 | MA-1 | 4 | - | - | 4200 | 6.7 |
| A-3 | a1-a | 1 | CA-26 | 26 | MA-1 | 20 | - | - | 1300 | 28.3 |
| A-4 | a1-a | 1 | CA-26 | 1.7 | MA-1 | 1 | - | - | 5700 | 2.7 |
| A-5 | a1-a | 1 | CA-26 | 1.47 | MA-1 | 0.68 | - | - | 8800 | 7.3 |
| A-6 | a1-a | 1 | CA-26 | 2.67 | MA-1 | 2.5 | - | - | 2100 | 7.4 |
| A-7 | a1-a | 1 | CA-26 | 2.45 | MA-1 | 1.1 | - | - | 4600 | 28.0 |
| A-8 | a1-a | 1 | CA-26 | 0.97 | MA-1 | 0.7 | - | - | 3400 | 4.2 |
| A-9 | a1-a | 1 | CA-26 | 2 | MA-1 | 1 | - | - | 5600 | 12.1 |
| A-10 | a1-e | 3.5 | CA-28 | 6 | MA-33 | 3.5 | - | - | 6100 | 6.1 |
| A-11 | a1-d | 1 | CA-27 | 3 | MA-1 | 3 | - | - | 8900 | 7 |
| A-12 | a1-a | 3.5 | CA-26 | 6 | MA-2 | 3.5 | - | - | 4600 | 6.4 |
| A-13 | a1-b | 4 | CA-1 | 8 | MA-17 | 5 | - | - | 4100 | 5.9 |
| A-14 | a1-b | 4 | CA-5 | 8 | MA-3 | 5 | - | - | 4000 | 5 |
| A-15 | a1-a | 3.5 | CA-1 | 6 | MA-2 | 3.5 | - | - | 3900 | 5.2 |
| A-16 | a1-b | 4.5 | CA-26 | 1 | - | - | OLA | 3 | 5800 | 7.3 |
| A-17 | a1-d | 3.5 | CA-27 | 0.5 | - | - | ST | 3 | 5200 | 5.7 |

OLA: oleic acid
ST: stearic acid

From the viewpoint of further improving the durability, the content of the polyester compound in the magneto rheological fluid is preferably 0.1% by mass or more, more preferably 0.2% by mass or more, and still more preferably 0.3% by mass or more, with respect to the mass of the magneto rheological fluid excluding the mass of the magnetic particles (that is, with respect to 100% by mass of such a mass). In addition, from the viewpoint of reducing the viscosity of the magneto rheological fluid and increasing the output of the magneto rheological fluid device, the content of the polyester compound in the magneto rheological fluid is preferably 1.0% by mass or less, and more preferably 0.9% by mass or less, still more preferably 0.8% by mass or less, and even still more preferably 0.7% by mass or less.

(Copper carboxylate)

In one form, the magneto rheological fluid can contain one or two or more kinds of copper carboxylates. It is preferable to contain a copper carboxylate from the viewpoint of further improving the durability of the magneto rheological fluid.

The copper carboxylate is a compound represented by General Formula 4. In a structure represented by General Formula 4-1, the bond between the copper atom and the oxygen atom can be a covalent bond or an ionic bond.

General Formula 4

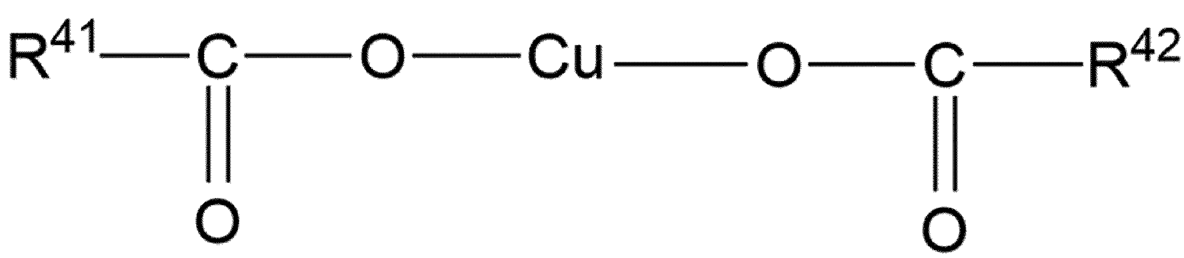

In a case where the bond is an ionic bond, the compound represented by General Formula 4 can also be represented by General Formula 4-1.

General Formula 4-1

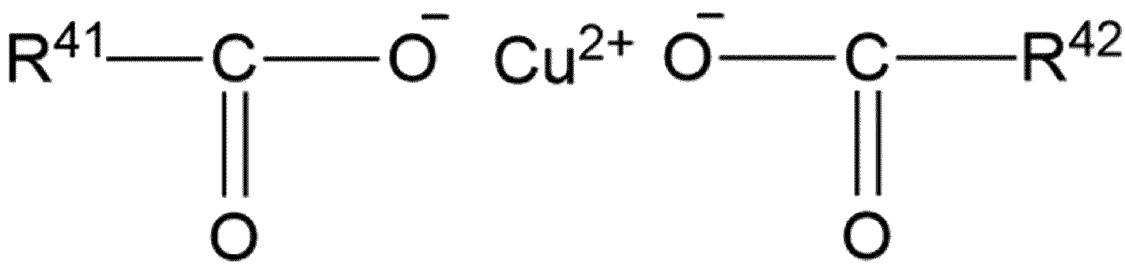

In General Formula 4, $R^{41}$ and $R^{42}$ each independently represent a hydrocarbon group and preferably represent a hydrocarbon group having 1 to 24 carbon atoms. Examples of such a hydrocarbon group include the following hydrocarbon groups.

For example, alkyl groups having 1 to 24 carbon atoms, such as a methyl group, an ethyl group, a normal (n-) propyl group, an isopropyl group, an n-butyl group, an isobutyl group, a secondary (sec-) butyl group, a tert-butyl group, a linear or branched pentyl group, a linear or branched hexyl group, a linear or branched heptyl group, a linear or branched octyl group, a linear or branched nonyl group, a linear or branched decyl group, and a linear or branched undecyl group, a linear or branched dodecyl group, a linear or branched tridecyl group, a linear or branched tetradecyl group, a linear or branched pentadecyl group, a linear or branched hexadecyl group, a linear or branched heptadecyl group, a linear or branched octadecyl group, a linear or branched nonadecyl group, a linear or branched icosyl group, a linear or branched henicosyl group, a linear or branched docosyl group, a linear or branched tricosyl group, and a linear or branched tetracosyl group;

alkenyl groups having 4 to 24 carbon atoms, such as a linear or branched butenyl group, a linear or branched

pentenyl group, a linear or branched hexenyl group, a linear or branched heptenyl group, a linear or branched octenyl group, a linear or branched nonenyl group, a linear or branched decenyl group, a linear or branched undecenyl group, a linear or branched dodecenyl group, a linear or branched tridecenyl group, a linear or branched tetradecenyl group, a linear or branched pentadecenyl group, a linear or branched hexadecenyl group, a linear or branched heptadecenyl group, a linear or branched octadecenyl group, a linear or branched nonadecenyl group, a linear or branched icocenyl group, a linear or branched henicocenyl group, a linear or branched dococenyl group, a linear or branched tricocenyl group, and a linear or branched tetracocenyl group;

cycloalkyl groups having 5 to 7 carbon atoms, such as a cyclopentyl group, a cyclohexyl group, and a cycloheptyl group;

alkylcycloalkyl groups having 6 to 24 carbon atoms, such as a methylcyclopentyl group, a dimethylcyclopentyl group (including all structural isomers thereof), a methylethylcyclopentyl group (including all structural isomers thereof), a diethylcyclopentyl group (including all structural isomers thereof), a methylcyclohexyl group, a dimethylcyclohexyl group (including all structural isomers thereof), a methylethylcyclohexyl group (including all structural isomers thereof), a diethylcyclohexyl group (including all structural isomers thereof), a methylcycloheptyl group, a dimethylcycloheptyl group (including all structural isomers thereof), a methylethylcycloheptyl group (including all structural isomers thereof), and a diethylcycloheptyl group (including all structural isomers thereof);

saturated hydrocarbon group moieties having 6 to 24 carbon atoms, excluding a carboxy group of naphthenic acid having 7 to 25 carbon atoms (a general term for saturated carboxylic acids having a naphthene nucleus), which is a main component of a petroleum acid;

aryl groups such as a phenyl group and a naphthyl group;

alkylaryl groups having 7 to 18 carbon atoms, such as a tolyl group (including all structural isomers thereof), a xylyl group (including all structural isomers thereof), an ethylphenyl group (including all structural isomers thereof), a linear or branched propylphenyl group (including all structural isomers thereof), a linear or branched butylphenyl group (including all structural isomers thereof), a linear or branched pentylphenyl group (including all structural isomers thereof), a linear or branched hexylphenyl group (including all structural isomers thereof), a linear or branched heptylphenyl group (including all structural isomers thereof), a linear or branched octylphenyl group (including all structural isomers thereof), a linear or branched nonylphenyl group (including all structural isomers thereof), a linear or branched decylphenyl group (including all structural isomers thereof), a linear or branched undecylphenyl group (including all structural isomers thereof), and a linear or branched dodecylphenyl group (including all structural isomers thereof); and

arylalkyl groups having 7 to 12 carbon atoms, such as a benzyl group, a phenylethyl group, a phenylpropyl group (including isomers of a propyl group), a phenylbutyl group (including isomers of a butyl group), a phenylpentyl group (including isomers of a pentyl group), and a phenylhexyl group (including isomers of a hexyl group).

Examples of the representative structure as the above-described "saturated hydrocarbon group moiety having 6 to 24 carbon atoms, excluding a carboxy group of naphthenic acid having 7 to 25 carbon atoms (a general term for saturated carboxylic acids having a naphthene nucleus), which is a main component of a petroleum acid" include an (alkyl)cyclopentylalkyl group having 6 to 24 carbon atoms, which is represented by General Formula 5, or an (alkyl)cyclohexylalkyl group having 7 to 24 carbon atoms, which is represented by General Formula 6. The term "(alkyl)cyclopentylalkyl group" is used to include an alkylcyclopentylalkyl group and a cyclopentylalkyl group. The term "(alkyl)cyclohexylalkyl group" is used to include an alkylcyclohexylalkyl group and a cyclohexylalkyl group.

General Formula 5

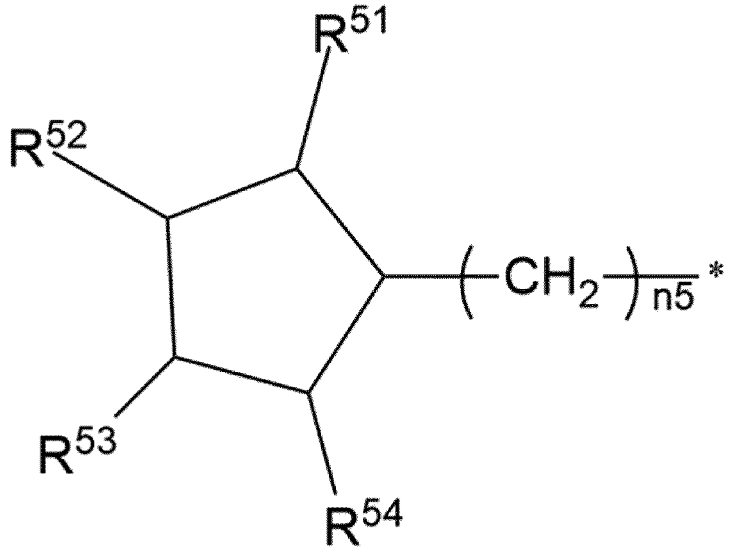

(In General Formula 5, $R^{51}$, $R^{52}$, $R^{53}$, and $R^{54}$ each independently represent a hydrogen atom, a methyl group, or an ethyl group, and n5 represents an integer in a range of 1 to 18.)

General Formula 6

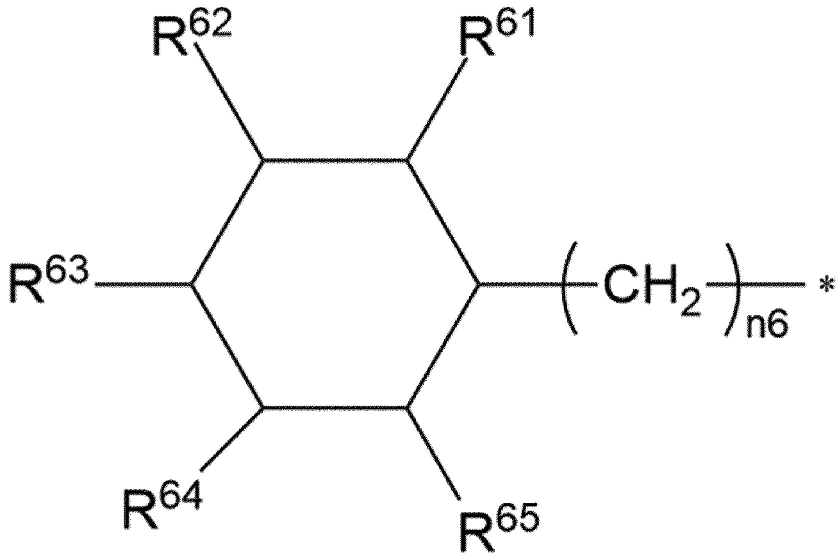

(In General Formula 6, $R^{61}$, $R^{62}$, $R^{63}$, $R^{64}$, and $R^{65}$ each independently represent a hydrogen atom, a methyl group, or an ethyl group, and n6 represents an integer in a range of 1 to 18.)

Among the compounds included in General Formula 4, a copper carboxylate, in which $R^{41}$ and $R^{42}$ each independently are a saturated hydrocarbon group moiety having 8 to 24 carbon atoms, which is obtained by removing a carboxy group of an alkyl group having 8 to 24 carbon atoms, an alkenyl group having 8 to 24 carbon atoms, an alkylcycloalkyl group having 8 to 24 carbon atoms, or a naphthenic acid having 9 to 25 carbon atoms, is preferable from the viewpoint of further improving the durability of the magneto rheological fluid.

Specific examples of the more preferred copper carboxylate include copper 2-ethyl hexanoate, copper n-dodecanoate (copper laurate), copper isododecanoate, copper n-octadecanoate (copper stearate), copper oleate, copper naphthenate having 9 to 25 carbon atoms, and a mixture thereof.

From the viewpoint of further improving the durability, the content of the copper carboxylate in the magneto rheological fluid is preferably 0.1% by mass or more, more preferably 0.3% by mass or more, still more preferably 0.5% by mass or more, and even still more preferably 0.7 by mass or more, with respect to the mass of the magneto rheological

fluid excluding the mass of the magnetic particles (that is, with respect to 100% by mass of such a mass). In addition, from the viewpoint of further improving the durability of the magneto rheological fluid, the content of the copper carboxylate in the magneto rheological fluid is preferably 5.0% by mass or less and more preferably 4.0% by mass or less, still more preferably 3.0% by mass or less, and even still more preferably 2.0% by mass or less. In addition, the mass ratio of the copper atom contained in the copper carboxylate to the zinc atom contained in the organic zinc compound is preferably in a range of 1/100 to 2/1, more preferably in a range of 1/50 to 1/1, and still more preferably in a range of 1/20 to 1/1 in terms of the mass ratio of "copper atom/zinc atom".

(Phenol-based compound and sulfur-based compound)

The magneto rheological fluid can also contain one or two or more selected from the group consisting of a phenol-based compound and a sulfur-based compound, and from the viewpoint of reducing the viscosity of the magneto rheological fluid, it is preferable to contain one or more kinds of phenol-based compounds and one or more kinds of sulfur-based compounds. The phenol-based compound and the sulfur-based compound can function as, for example, an antioxidant. In a case where the above-described organic zinc compound contains sulfur, such an organic zinc compound shall not correspond to the "sulfur-based compound" described here. This point also applies to the polyester compound described above. In addition, in a case where the above-described organic zinc compound is a compound having a structure of a derivative of phenol, such an organic zinc compound shall not correspond to the "phenol-based compound" described here. This point also applies to the polyester compound described above.

Phenol-based compound

In the present invention and the present specification, the "phenol-based compound" includes a phenol and a derivative thereof. Examples of the phenol-based compound include 2,6-di-tert(tertiary)-butylphenol (hereinafter, "tert-butyl" is abbreviated as "t-butyl"), 2,6-di-t-butyl-4-methylphenol, 2,6-di-t-butyl-4-ethylphenol, 2,4-dimethyl-6-t-butylphenol, 4,4'-methylenebis(2,6-di-t-butylphenol), 4,4'-bis(2,6-di-t-butylphenol), 4,4'-bis(2-methyl-6-t-butylphenol), 2,2'-methylenebis(4-methyl-6-t-butylphenol), 2,2'-methylenebis(4-ethyl-6-t-butylphenol), 4,4'-butylidenebis(3-methyl-6-t-butylphenol), 4,4'-isopropyridenebis(2,6)-di-t-butylphenol), 2,2'-methylenebis(4-methyl-6-cyclohexylphenol), 2,2'-methylenebis(4-methyl-6-nonylphenol), 2,2'-isobutylidenebis(4,6-dimethylphenol), 2,6-bis(2'-hydroxy-3'-t-butyl-5'-methylbenzyl)-4-methylphenol, 3-t-butyl-4-hydroxyanisole, 2-t-butyl-4-hydroxyanisole, stearyl 3-(4-hydroxy-3,5-di-t-butylphenyl)propionate, oleyl 3-(4-hydroxy-3,5-di-t-butylphenyl)propionate, dodecyl 3-(4-hydroxy-3,5-di-t-butylphenyl)propionate, decyl 3-(4-hydroxy-3,5-di-t-butylphenyl)propionate, octyl 3-(4-hydroxy-3,5-di-t-butylphenyl)propionate, tetrakis{3-(4-hydroxy-3,5-di-t-butylphenyl)propionyloxymethyl}methane, 3-(4-hydroxy-3,5-di-t-butylphenyl)propionic acid glycerin monoester, an ester of 3-(4-hydroxy-3,5-di-t-butylphenyl)propionic acid and glycerin monooleyl ether, 3-(4-hydroxy-3,5-di-t-butylphenyl)propionic acid butylene glycol diester, 3-(4-hydroxy-3,5-di-t-butylphenyl)propionic acid thiodiglycol diester, 4,4'-thiobis(3-methyl-6-t-butylphenol), 4,4'-thiobis(2-methyl-6-t-butylphenol), 2,2'-thiobis(4-methyl-6-t-butylphenol), 2,6-di-t-butyl-$\alpha$-dimethylamino-p-cresol, 4,6-bis(octylthiomethyl)-o (ortho)-cresol, 4,6-bis(dodecylthiomethyl)-o-cresol, 2,6-di-t-butyl -4-(N,N'-dimethylaminomethylphenol), bis(3,5-di-t-butyl-4-hydroxybenzyl)sulfide, tris{(3,5-di-t-butyl-4-hydroxyphenyl)propionyl-oxyethyl}isocyanurate, tris (3,5-di-t-butyl-4-hydroxyphenyl)isocyanurate, 1,3,5-tris (3,5-di-t-butyl-4-hydroxybenzyl)isocyanurate, bis{2-methyl-4-(3-n-alkylthiopropionyloxy)-5-t-butylphenyl}sulfide, 1,3,5-tris(4-t-butyl-3-hydroxy-2,6-dimethylbenzyl)isocyanurate, tetraphthaloyl-di(2,6-dimethyl-4-t-butyl-3-hydroxybenzylsulfide), 6-(4-hydroxy-3,5-di-t-butylanilino)-2,4-bis(octylthio)-1,3,5-triazine, 2,2'-thio-diethylenebis[3-(3,5-di-t-butyl-4-hydroxyphenyl)propionate], tridecyl-3-(3,5-di-t-butyl-4-hydroxyphenyl)propionate, pentaerythrityl-tetrakis[3-(3,5-di-t-butyl-4-hydroxyphenyl)propionate], octadecyl-3-(3,5-di-t-butyl-4-hydroxyphenyl)propionate, octyl-3-(3,5-di-t-butyl-4-hydroxyphenyl)propionate, heptyl-3-(3,5-di-t-butyl-4-hydroxyphenyl)propionate, octyl-3-(3-methyl-5-t-butyl-4-hydroxyphenyl)propionate, nonyl-3-(3-methyl-5-t-butyl-4-hydroxyphenyl)propionate, hexamethylenebis[3-(3,5-di-t-butyl-4-hydroxyphenyl)propionate], an alkyl ester in which a side chain of [3,5-bis(1,1-dimethyl-ethyl)-4-hydroxy]benzenepropionic acid has 7 to 9 carbon atoms, 2,4,8-tetraoxaspiro[5,5]undecane-3,9-diylbis(2-methylpropane-2,1-diyl)bis[3-(3,5-di-t-butyl-4 -hydroxyphenyl)propionate], 3,5-di-t-butyl-4-hydroxy-benzyl-phosphate diester, bis(3-methyl-4-hydroxy-5-t-butylbenzyl)sulfide, 3,9-bis[1,1-dimethyl-2-{$\beta$-(3-t-butyl-4-hydroxy-5-methylphenyl)propionyloxy}ethyl]-2,4,8,10 -tetraoxaspiro[5,5]undecane, 1,1,3-tris(2-methyl-4-hydroxy-5-t-butylphenyl)butane, 1,1-bis(2-methyl-4-hydroxy-5-t-butylphenyl)butane, 1,3,5-trimethyl-2,4,6-tris(3,5-di-t-butyl-4-hydroxybenzyl)benzene, 2,4,6-tris(3,5-di-t-butyl-4-hydroxybenzyl)mesitylene, a 3,5-di-t-butyl-4-hydroxybenzylalkyl ester, and bis{3,3'-bis-(4'-hydroxy-3'-t-butylphenyl)butyric acid}glycol ester.

As the phenol-based compound, a commercially available product can be used, or those prepared by a known method can also be used. Examples of the preferred phenol-based compound include a hindered phenol-based compound. In the present invention and the present specification, the "hindered phenol-based compound" refers to a compound having a substituent at the ortho position with respect to the hydroxy group of the phenol. Examples of the

substituent at the ortho position include an alkyl group, an alkoxy group, an amino group, and a halogen atom. Among these, an alkyl group such as a methyl group, an ethyl group, an n-propyl group, an isopropyl group, an n-butyl group, a secondary butyl group, an isobutyl group, or a tertiary butyl group is preferable, an isopropyl group, a secondary butyl group, an isobutyl group, or a tertiary butyl group is more preferable, and a tertiary butyl group is still more preferable. In addition, it is preferable that both of the two ortho positions with respect to the hydroxy group of the phenol are substituted with a substituent. The hindered phenol-based compound is commercially available generally as a hindered phenol-based antioxidant. Specific examples of the commercially available phenol-based compounds include the ADEKASTAB AO series manufactured by ADEKA Corporation and ADEKA ECOROYAL AIN series manufactured by ADEKA Corporation. However, the examples thereof are not limited to this.

Sulfur-based compound

In the present invention and the present specification, the "sulfur-based compound" shall refer to a compound containing sulfur (S), and it is preferably an organic compound containing sulfur.

The sulfur-based compound is preferably a thioether-based compound from the viewpoint of reducing the viscosity of the magneto rheological fluid. The thioether-based compound is a compound having a thioether bond (-S-), where the thioether-based compound is preferably an organic compound having a thioether bond. Specific examples thereof include dilauryl thiodipropionate, ditridecyl thiodipropionate, distearyl thiodipropionate, pentaerythritol tetrakis(3-dodecylthiopropionate), and 4,4-thiobis(2-t-butyl-5-methylphenol)bis-3-(dodecylthio)propionate.

As the sulfur-based compound, a commercially available product can be used, or those prepared by a known method can also be used. As the commercially available product thereof, it is possible to use, for example, those that are commercially available as the thioether-based antioxidant. Specific examples of the commercially available product thereof include the ADEKA ECOROYAL AIN series manufactured by ADEKA Corporation. However, the examples thereof are not limited to this.

In a case where the magneto rheological fluid contains a phenol-based compound and/or a sulfur-based compound, the content thereof is preferably 0.1% by mass or more and more preferably 0.5% by mass or more, and it is preferably 3.0% by mass or less and more preferably 2.0% by mass or less with respect to the mass of the magneto rheological fluid excluding the mass of the magnetic particles (that is, with respect to 100% by mass of such a mass). In a case where the phenol-based compound is contained but the sulfur-based compound is not contained, the above-described content is the content of the phenol-based compound, in a case where the sulfur-based compound is contained but the phenol-based compound is not contained, it is the content of the sulfur-based compound, and in a case where the phenol-based compound and the sulfur-based compound are contained, it is the total content thereof.

(Dispersant)

The magneto rheological fluid can contain a dispersant for increasing the dispersibility of the magnetic particles in the magneto rheological fluid. As the dispersant, it is possible to use each of components that can contribute to the improvement of the dispersibility of the magnetic particles. Specific examples of the compound that can function as the dispersant include a fatty acid such as oleic acid or stearic acid and a silicone-based compound. The "silicone-based compound" is a compound containing a siloxane bond (Si-O-Si), and it is preferably an organic compound containing a siloxane bond. In a case where the carrier fluid contained in the magneto rheological fluid is a silicone-based fluid, the silicone-based compound shall refer to a silicone-based compound different from the silicone-based fluid. It is preferable to use the silicone-based fluid and the silicone-based compound in combination from the viewpoint of reducing the viscosity of the magneto rheological fluid.

Examples of the silicone-based compound include trimethyl siloxysilicate. Examples of the commercially available product containing trimethyl siloxysilicate include KF-7312J (a dissolved product of cyclopentasiloxane), X-21-5595 (a dissolved product of isododecane), KF-9021 (a dissolved product of cyclopentasiloxane), and X-21-5249L (a dissolved product of dimethyl polysiloxane (also referred to as dimethicone), which are manufactured by Shin-Etsu Chemical Co., Ltd.

A polymer can also be used as the silicone-based compound. Here, the polymer is not limited to the homopolymer, and it can be a copolymer. The polymer is generally called a resin and is commercially available. Examples of the silicone-based compound of the polymer include partially cross-linked polyether-modified silicone, partially cross-linked polyglycerin-modified silicone, linear or branched polyoxyethylene-modified organopolysiloxane, linear or branched polyoxyethylene polyoxypropylene-modified organopolysiloxane, linear or branched polyoxyethylene-alkyl co-modified organopolysiloxane, linear or branched polyoxyethylene polyoxypropylene-alkyl co-modified organopolysiloxane, linear or branched polyglycerin-modified organopolysiloxane, and linear or branched polyglycerin-alkyl co-modified organopolysiloxane. Specific examples of the commercially available product thereof include the following products manufactured by Shin-Etsu Chemical Co., Ltd.: KSG-210, 240, 310, 320, 330, 340, 320Z, 350Z, 710, 810, 820, 830, 840, 820Z, 850Z;

KF-6011, 6013, 6017, 6043, 6028, 6038, 6048, 6100, 6104, 6105, 6106; and KP-578. Preferred specific examples of the silicone-based compound include acrylic silicone. Here, the "acrylic silicone" shall refer to a copolymer of a (meth)acrylic acid ester and dimethyl polysiloxane. Specific examples of the acrylic silicone include KP-578 manufactured by Shin-Etsu Chemical Co., Ltd.

The content of the silicone-based compound in the magneto rheological fluid (however, the content of the silicone-based fluid is excluded in the case where the carrier fluid is the silicone-based fluid) is preferably a range of 0.1% to 10.0% by mass and more preferably in a range of 0.5% to 5.0% by mass with respect to the mass of the magneto rheological fluid excluding the mass of the magnetic particles (that is, with respect to 100% by mass of such a mass).

In addition to the components described above, the magneto rheological fluid can also contain, at any content, one or more kinds of various components known as additives that can be used in the magneto rheological fluid.

The magneto rheological fluid can be applied to a magneto rheological fluid device. This point will be further described later.

<Production method for magneto rheological fluid>

The magneto rheological fluid can be produced by mixing the above-described various components in any order or at the same time. Examples of the preferred production method include a production method that includes subjecting a mixture containing magnetic particles, a carrier fluid, an organic zinc compound, and melamine (iso)cyanurate to resonance acoustic mixing.

"Resonance acoustic mixing" means carrying out mixing by using acoustic resonance energy. It is preferable that a mixture containing particles is enclosed in a container, a vibration of a low-frequency of about 60 hertzs (Hz) is applied to the container to vibrate it up and down with a high acceleration force, the natural vibration frequency of the particles in the container (for example, about 60 Hz) is used to propagate high energy to the particles by resonance, and the components in the container are mixed by the collision between the particles and/or the collision between the particles and the container. The inventors of the present invention conceive that in the above-described production method, the employment of the resonance acoustic mixing as the mixing treatment can contribute to reducing the viscosity of the magneto rheological fluid. A mixer for carrying out the resonance acoustic mixing is generally called a resonance acoustic mixer. The resonance acoustic mixer is generally denoted as a resonance acoustic mixer (RAM). As the resonance acoustic mixer, it is possible to use, for example, a low-frequency resonance acoustic mixer PharmaRAM manufactured by Resodyn Corporation. The treatment conditions can be set such that, for example, the frequency is about 60 Hz, the gravitational acceleration is about 50 to 100 G, and the mixing treatment time is about 1 to 60 minutes. However, the above-described treatment conditions are merely an example, and the mixing conditions may be set depending on the kind, mixing ratio, treatment amount, and the like of the components to be used for producing the magneto rheological fluid. Regarding the unit G of the gravitational acceleration, 1 G is 9.80665 $m/s^2$.

After the mixing, post-treatment can be carried out by a known method, as necessary. Examples of the post-treatment include a stirring treatment, a dispersion treatment using an ultrasonic wave, a sand mill or the like, and filtration.

[Magneto rheological fluid device]

An aspect of the present invention relates to a magneto rheological fluid device including the magneto rheological fluid.

Specific examples of the magneto rheological fluid device include a brake, a clutch, a damper, and a shock absorber. These can be used in automobiles, various vehicles, building structures, drones, home appliances. In addition, specific examples of the magneto rheological fluid device include various devices that are used in the field of health and welfare, such as an artificial leg, an artificial hand, and a training device. The magneto rheological fluid device contains the magneto rheological fluid described in detail above. Since the magneto rheological fluid can exhibit excellent durability, the magneto rheological fluid device including the magneto rheological fluid can exhibit excellent performance for a long period of time.

The magneto rheological fluid device may be any device as long as the magneto rheological fluid is included in a portion of the device into which the magneto rheological fluid should be introduced, and a known technique related to the magneto rheological fluid device can be applied for details of the device configuration and the like.

Examples

Hereinafter, the present invention will be described based on Examples. However, the present invention is not limited to the embodiments shown in Examples. "Parts" described below means parts by mass.

In Examples and Comparative Examples described later, a magneto rheological fluid was prepared according to the preparation method shown below.

<Preparation method for magneto rheological fluid>

The following various components were charged into an airtight container made of polypropylene having an inner volume of 120 ml so that the amount of the magnetic particles was 118.4 g, this container was disposed in a low-frequency resonance acoustic mixer PharmaRAM manufactured by Resodyn Corporation, and resonance acoustic mixing was carried out for 5 minutes under the mixing conditions of a frequency of 60 Hz and a gravitational acceleration of 100 G. The filtration of the liquid after such resonance acoustic mixing was carried out with a nylon mesh having a sieve opening dimension of 100 μm.

<Synthesis method for polyester compound A-1>

The components a1 to a3 shown in Table 1 were charged into a reaction container equipped with a Dean-Stark dehydration device at the functional group equivalent ratio shown in Table 1. This mixture was reacted at 190°C for 5 hours and further reacted at 220°C for 4 hours under a nitrogen stream of 0.3 L/min. The water generated during the reaction was removed. The reactant was cooled to room temperature to obtain a polyester compound A-1 of a yellow transparent liquid-like substance, shown in Table 1.

[Example 1]

<Prescription of magneto rheological fluid>

Magnetic particles: 100.00 parts
product name: Carbonyl Iron Powder RZ, Jiangsu Tianyi Ultra-Fine Metal Powder Co., Ltd.
Carrier fluid: 26.80 parts
product name: KF-96-20CS (a silicone oil), manufactured by Shin-Etsu Chemical Co., Ltd. (described as "Silicone" in Table 2)
Organic zinc compound: 0.85 parts
product name: KIKU-LUBE Z-112, manufactured by ADEKA Corporation (zinc dialkyldithiophosphate (ZnDTP) represented by General Formula 1)
Melamine (iso)cyanurate: 0.25 parts
Melamine cyanurate MC-6000, manufactured by Nissan Chemical Corporation
Phenol-based compound: 0.14 parts
product name: ADEKA ECOROYAL AIN-200 (a hindered phenol-based antioxidant), manufactured by ADEKA Corporation
Sulfur-based compound: 0.14 parts
product name: ADEKA ECOROYAL AIN-700 (a thioether-based antioxidant), manufactured by ADEKA Corporation
Silicone-based compound: 0.25 parts
product name: KP578 (an acrylic silicone), manufactured by Shin-Etsu Chemical Co., Ltd.

With the various components described above, magneto rheological fluids were prepared according to the above-described preparation method.

As a result of determining the content of the magnetic particles (unit: % by volume) in the magneto rheological fluid according to the method described above, the content thereof was the value shown in Table 2.

In the magneto rheological fluid of Example 1, the content of the organic zinc compound and the content of the melamine (iso)cyanurate are the values shown in Table 2, the content of the phenol-based compound is 0.5% by mass, the content of the sulfur-based compound is 0.5% by mass, and the content of the acrylic silicone is 0.9% by mass, with respect to the mass of the magneto rheological fluid excluding the mass of the magnetic particles (that is, with respect to 100% by mass of the total mass of the components other than the magnetic particles).

[Example 2]

A magneto rheological fluid was prepared according to the method described in Example 1, except that the amount of the used polyester compound A-1 was such that the content thereof was the value shown in Table 2 in a case where the total mass of the components of the magneto rheological fluid other than the magnetic particles was 100% by mass.

As a result of determining the content of the magnetic particles (unit: % by volume) in the magneto rheological

fluid regarding the prepared magneto rheological fluid, according to the method described above, it was the value shown in Table 2.

In the magneto rheological fluid of Example 2, the content of the organic zinc compound and the content of the melamine (iso)cyanurate are the values shown in Table 2, the content of the phenol-based compound is 0.5% by mass, the content of the sulfur-based compound is 0.5% by mass, and the content of the acrylic silicone is 0.9% by mass, with respect to the mass of the magneto rheological fluid excluding the mass of the magnetic particles (that is, with respect to 100% by mass of the total mass of the components other than the magnetic particles).

[Example 3]

A magneto rheological fluid was prepared according to the method described in Example 1, except that a mixture obtained by mixing, as carrier fluids, a poly-alpha-olefin-based fluid (product name: Synfluid PAO 4cSt, manufactured by Chevron Philipps Chemical) and a polyol ester-based fluid (product name: NYCO 7300 (TMP), manufactured by NYCOBASE) at a ratio of 8/2 of the former/the latter in terms of mass ratio was used, and that in the magneto rheological fluid, the amount of the used magnetic particles was such that the content of thereof was the value shown in Table 2.

In Table 2, the mixture of the poly-alpha-olefin-based fluid and the ester-based fluid is described as "Blend", and the mixing ratio of the former/the latter in terms of mass is described as "Blend ratio PAO/ester".

As a result of determining the content of the magnetic particles (unit: % by volume) in the magneto rheological fluid regarding the prepared magneto rheological fluid, according to the method described above, it was the value shown in Table 2.

In the magneto rheological fluid of Example 3, the content of the organic zinc compound and the content of the melamine (iso)cyanurate are the values shown in Table 2, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Examples 4 to 6]

A magneto rheological fluid was prepared according to the method described in Example 3, except that the amount of the used polyester compound A-1 was such that the content thereof was the value shown in Table 2 in a case where the total mass of the components of the magneto rheological fluid other than the magnetic particles was 100% by mass.

As a result of determining the content of the magnetic particles (unit: % by volume) in the magneto rheological fluid regarding the prepared magneto rheological fluid, according to the method described above, it was the value shown in Table 2.

In all the magneto rheological fluid of Examples 4 to 6, the content of the organic zinc compound and the content of the melamine (iso)cyanurate are the values shown in Table 2, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Example 7]

A magneto rheological fluid was prepared according to the method described in Example 4, except that the mixing ratio of the poly-alpha-olefin-based fluid to the polyol ester-based fluid (product name: NYCO 7300 (TMP), manufactured by NYCOBASE), which had been used as the carrier fluids, was changed to the value shown in Table 2.

As a result of determining the content of the magnetic particles (unit: % by volume) in the magneto rheological fluid regarding the prepared magneto rheological fluid, according to the method described above, it was the value shown in Table 2.

In all the magneto rheological fluid of Example 7, the content of the organic zinc compound and the content of the melamine (iso)cyanurate are the values shown in Table 2, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Example 8 and Example 9]

A magneto rheological fluid was prepared according to the method described in Example 7, except that the amount of the used copper oleate (product name: Copper (II) Oleate, manufactured by FUJIFILM Wako Pure Chemical Corporation) instead of the polyester compound A-1 was such that the content thereof was the value shown in Table 2 in a case where the total mass of the components of the magneto rheological fluid other than the magnetic particles was 100% by mass.

As a result of determining the content of the magnetic particles (unit: % by volume) in the magneto rheological fluid regarding the prepared magneto rheological fluid, according to the method described above, it was the value shown in Table 2.

In all the magneto rheological fluid of Example 8 and Example 9, the content of the organic zinc compound and the content of the melamine (iso)cyanurate are the values shown in Table 2, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Example 10 and Example 11]

A magneto rheological fluid was prepared according to the method described in Example 3, except that the amount of the used melamine (iso)cyanurate was such that the content thereof was the value shown in Table 2 in a case where the total mass of the components of the magneto rheological fluid other than the magnetic particles was 100% by mass, and that the amount of the used polyester compound A-1 was such that the content thereof was the value shown in Table 2 in a case where the total mass of the components of the magneto rheological fluid other than the magnetic particles was 100% by mass.

As a result of determining the content of the magnetic particles (unit: % by volume) in the magneto rheological fluid regarding the prepared magneto rheological fluid, according to the method described above, it was the value shown in Table 2.

In all the magneto rheological fluid of Example 10 and Example 11, the content of the organic zinc compound and the content of the melamine (iso)cyanurate are the values shown in Table 2, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Example 12]

A magneto rheological fluid was prepared according to the method described in Example 4, except that the amount of the used organic zinc compound was such that the content thereof was the value shown in Table 2 in a case where the total mass of the components of the magneto rheological fluid other than the magnetic particles was 100% by mass.

As a result of determining the content of the magnetic particles (unit: % by volume) in the magneto rheological fluid regarding the prepared magneto rheological fluid, according to the method described above, it was the value shown in Table 2.

In the magneto rheological fluid of Example 12, the content of the organic zinc compound and the content of the melamine (iso)cyanurate are the values shown in Table 2, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Example 13]

A magneto rheological fluid was prepared according to the method described in Example 4, except that the amount of the used organic zinc compound was such that the content thereof was the value shown in Table 2 in a case where the total mass of the components of the magneto rheological fluid other than the magnetic particles was 100% by mass.

As a result of determining the content of the magnetic particles (unit: % by volume) in the magneto rheological fluid regarding the prepared magneto rheological fluid, according to the method described above, it was the value shown in Table 2.

In the magneto rheological fluid of Example 12, the content of the organic zinc compound and the content of

the melamine (iso)cyanurate are the values shown in Table 2, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Comparative Example 1]

A magneto rheological fluid was prepared according to the method described in Example 1, except that melamine (iso)cyanurate was not used.
As a result of determining the content of the magnetic particles (unit: % by volume) in the magneto rheological fluid regarding the prepared magneto rheological fluid, according to the method described above, it was the value shown in Table 3.
In the magneto rheological fluid of Comparative Example 1, the content of the organic zinc compound is the value shown in Table 3, the content of the phenol-based compound is 0.5% by mass, the content of the sulfur-based compound is 0.5% by mass, and the content of the acrylic silicone is 0.9% by mass, with respect to the mass of the magneto rheological fluid excluding the mass of the magnetic particles (that is, with respect to 100% by mass of the total mass of the components other than the magnetic particles).

[Comparative Example 2]

A magneto rheological fluid was prepared according to the method described in Example 1, except that the amount of the used component shown in the column of "Solid lubricant" in Table 3 instead of the melamine (iso)cyanurate was such that the content thereof was the value shown in Table 3 in a case where the total mass of the components of the magneto rheological fluid other than the magnetic particles was 100% by mass. In Table 3, "MoDTC" is molybdenum dithiocarbamate. As the MoDTC, SAKURA-LUBE 600 (product name, manufactured by ADEKA Corporation) was used.
As a result of determining the content of the magnetic particles (unit: % by volume) in the magneto rheological fluid regarding the prepared magneto rheological fluid, according to the method described above, it was the value shown in Table 3.
In the magneto rheological fluid of Comparative Example 2, the content of the organic zinc compound is the value shown in Table 3, the content of the phenol-based compound is 0.5% by mass, the content of the sulfur-based compound is 0.5% by mass, and the content of the acrylic silicone is 0.9% by mass, with respect to the mass of the magneto rheological fluid excluding the mass of the magnetic particles (that is, with respect to 100% by mass of the total mass of the components other than the magnetic particles).

[Comparative Example 3]

A magneto rheological fluid was prepared according to the method described in Comparative Example 1, except that the amount of the used polyester compound A-1 was such that the content thereof was the value shown in Table 3 in a case where the total mass of the components of the magneto rheological fluid other than the magnetic particles was 100% by mass.
As a result of determining the content of the magnetic particles (unit: % by volume) in the magneto rheological fluid regarding the prepared magneto rheological fluid, according to the method described above, it was the value shown in Table 3.
In the magneto rheological fluid of Comparative Example 3, the content of the organic zinc compound is the value shown in Table 3, the content of the phenol-based compound is 0.5% by mass, the content of the sulfur-based compound is 0.5% by mass, and the content of the acrylic silicone is 0.9% by mass, with respect to the mass of the magneto rheological fluid excluding the mass of the magnetic particles (that is, with respect to 100% by mass of the total mass of the components other than the magnetic particles).

[Comparative Example 4]

A magneto rheological fluid was prepared according to the method described in Comparative Example 2, except that the amount of the used polyester compound A-1 was such that the content thereof was the value shown in Table 3 in a case where the total mass of the components of the magneto rheological fluid other than the magnetic particles was 100% by mass.
As a result of determining the content of the magnetic particles (unit: % by volume) in the magneto rheological fluid regarding the prepared magneto rheological fluid, according to the method described above, it was the value shown in Table 3.

In the magneto rheological fluid of Comparative Example 4, the content of the organic zinc compound is the value shown in Table 3, the content of the phenol-based compound is 0.5% by mass, the content of the sulfur-based compound is 0.5% by mass, and the content of the acrylic silicone is 0.9% by mass, with respect to the mass of the magneto rheological fluid excluding the mass of the magnetic particles (that is, with respect to 100% by mass of the total mass of the components other than the magnetic particles).

[Comparative Example 5]

A magneto rheological fluid was prepared according to the method described in Example 3, except that melamine (iso)cyanurate was not used.

As a result of determining the content of the magnetic particles (unit: % by volume) in the magneto rheological fluid regarding the prepared magneto rheological fluid, according to the method described above, it was the value shown in Table 3.

In the magneto rheological fluid of Comparative Example 5, the content of the organic zinc compound is the value shown in Table 3, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Comparative Example 6]

A magneto rheological fluid was prepared according to the method described in Comparative Example 5, except that the amount of the used component shown in the column of "Solid lubricant" in Table 3 was such that the content thereof was the value shown in Table 3 in a case where the total mass of the components of the magneto rheological fluid other than the magnetic particles was 100% by mass.

As a result of determining the content of the magnetic particles (unit: % by volume) in the magneto rheological fluid regarding the prepared magneto rheological fluid, according to the method described above, it was the value shown in Table 3.

In the magneto rheological fluid of Comparative Example 6, the content of the organic zinc compound is the value shown in Table 3, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Comparative Example 7]

A magneto rheological fluid was prepared according to the method described in Comparative Example 5, except that the amount of the used polyester compound A-1 was such that the content thereof was the value shown in Table 3 in a case where the total mass of the components of the magneto rheological fluid other than the magnetic particles was 100% by mass.

As a result of determining the content of the magnetic particles (unit: % by volume) in the magneto rheological fluid regarding the prepared magneto rheological fluid, according to the method described above, it was the value shown in Table 3.

In the magneto rheological fluid of Comparative Example 7, the content of the organic zinc compound is the value shown in Table 3, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Comparative Example 8]

A magneto rheological fluid was prepared according to the method described in Comparative Example 6, except that the amount of the used polyester compound A-1 was such that the content thereof was the value shown in Table 3 in a case where the total mass of the components of the magneto rheological fluid other than the magnetic particles was 100% by mass.

As a result of determining the content of the magnetic particles (unit: % by volume) in the magneto rheological fluid regarding the prepared magneto rheological fluid, according to the method described above, it was the value shown in Table 3.

In the magneto rheological fluid of Comparative Example 8, the content of the organic zinc compound is the value shown in Table 3, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Comparative Example 9]

A magneto rheological fluid was prepared according to the method described in Comparative Example 8, except that the component shown in the column of "Solid lubricant" in Table 3 was changed to the component shown in Table 3 and the amount thereof used was such that the content thereof was the value shown in Table 3 in a case where the total mass of the components of the magneto rheological fluid other than the magnetic particles was 100% by mass. In Table 3, "BN" is boron nitride. As the boron nitride, AP-100S (product name, manufactured by MARUKA Corporation) was used.

As a result of determining the content of the magnetic particles (unit: % by volume) in the magneto rheological fluid regarding the prepared magneto rheological fluid, according to the method described above, it was the value shown in Table 3.

In the magneto rheological fluid of Comparative Example 49, the content of the organic zinc compound is the value shown in Table 3, the content of the phenol-based compound is 0.5% by mass, the content of the sulfur-based compound is 0.5% by mass, and the content of the acrylic silicone is 1.5% by mass, with respect to the mass of the magneto rheological fluid excluding the mass of the magnetic particles (that is, with respect to 100% by mass of the total mass of the components other than the magnetic particles).

[Evaluation of durability of magneto rheological fluid]

The durability of the magneto rheological fluid of each of Examples and Comparative Examples described above was evaluated according to the following method by using a magneto rheological (MR) characteristic evaluation device manufactured by ER Tech Co., Ltd.

2 ml of the magneto rheological fluid was placed in a groove provided in a coil portion of the MR characteristic evaluation device, a rotor having a gap interval of 0.05 mm (average distance from rotor center to gap part: 21.5 mm) was inserted into the gap part, the overflowing magneto rheological fluid was removed with a paper rag (KimWipes manufactured by NIPPON PAPER CRECIA Co., LTD.), the rotor rotation speed was set to 80 rotations per minute (rpm), a proportional-integral-differential (PID) control was carried out so that the torque was 2 Nm, and the test was carried out for 6 hours. In this case, a stress value at a magnetic flux density of 1 tesla (T) was measured every hour. During the test, A small fan YMF-102S, manufactured by Yamazen Corporation, was used to blow wind at a wind speed of about 0.6 m/sec from a distance of about 10 cm toward the MR characteristic evaluation device to subject the MR characteristic evaluation device to air cooling.

A slope over time was determined from the measurement results, a time at which the stress value reached 85% of the initial value was determined, and the value (unit: MJ/ml) obtained by dividing the amount of the input energy by the amount of the magneto rheological fluid between the gaps is shown in the column of "Durability" in Table 2 and Table 3. It can be said that a magneto rheological fluid having a larger value determined in this way is more excellent in durability.

The value determined above is generally referred to as life time dissipated energy (LDE). The LDE is determined by dividing the amount of the energy input until a specific termination condition is satisfied, by the amount of the tested magneto rheological fluid. In the present evaluation, the determination was made as described above. Specifically, the amount of the magneto rheological fluid tested was 0.111 ml of the magneto rheological fluid between the gaps. The amount of the input energy was $2 \times 3.14159 \times 2$ (Nm) $\times$ 80 (rpm)/60 (seconds) = 16.8 W. The input energy per hour is $16.8 \times 3{,}600$ seconds/0.111 ml/1,000,000 = 0.545 MJ/ml/hour in a case of being converted into a value per 1 ml. This value was multiplied by a time at which the stress value reached 85% of the initial value, whereby the above-described value was calculated.

The above results are shown in Table 2 and Table 3.

[Table 2]

| | | Unit | Example 1 | Example 2 | Example 3 | Example 4 | Example 5 | Example 6 | Example % | Example 8 | Example 9 | Example 10 | Example 11 | Example 12 | Example 13 |
|---|---|---|---|---|---|---|---|---|---|---|---|---|---|---|---|
| Melamine (iso)cyanurate | Contained/not contained | - | Contained | Contained | Contained | Contained | Contained | Contained | Contained | Contained | Contained | Contained | Contained | Contained | Contained |
| | Content | % by mass | 0.9 | 0.9 | 0.9 | 0.9 | 0.9 | 0.9 | 0.9 | 0.9 | 0.9 | 0.5 | 2.0 | 0.9 | 0.9 |
| Polyester compound A-1 | Contained or not contained | - | Not contained | Contained | Not contained | Contained | Contained | Contained | Contained | Not contained | Not contained | Contained | Contained | Contained | Contained |
| | Content | % by mass | - | 0.5 | - | 0.2 | 0.1 | 0.5 | 0.2 | - | - | 0.2 | 0.2 | 0.2 | 0.2 |
| Copper oleate | Contained or not contained | - | - | - | - | - | - | - | - | Contained | Contained | - | - | - | - |
| | Content | % by mass | - | - | - | - | - | - | - | 1.0 | 3.0 | - | - | - | - |
| Organic zinc compound | Content | % by mass | 3.0 | 3.0 | 3.0 | 3.0 | 3.0 | 3.0 | 3.0 | 3.0 | 3.0 | 3.0 | 3.0 | 1.5 | 5.0 |
| Carrier fluid | Kind | - | Silicone | Silicone | Blend | Blend | Blend | Blend | Blend | Blend | Blend | Blend | Blend | Blend | Blend |
| | Blend ratio PAO/ester | - | - | - | 8/2 | 8/2 | 8/2 | 8/2 | 9/1 | 9/1 | 9/1 | 8/2 | 8/2 | 8/2 | 8/2 |
| Magnetic particle | Content | % by volume | 30 | 30 | 40 | 40 | 40 | 40 | 40 | 40 | 40 | 40 | 40 | 40 | 40 |
| Durability | | MJ/ml | 8.0 | 10.2 | 7.0 | 8.7 | 8.5 | 9.5 | 8.7 | 15.6 | 10.5 | 9.4 | 9.0 | 8.5 | 8.5 |

[Table 3]

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| Solid lubricant | Kind | - | Not contained | MoDTC | Not contained | MoDTC | Not contained | MoDTC | Not contained | MoDTC | BN |
| | Content | % by mass | - | 0.9 | - | 0.9 | - | 0.9 | - | 0.9 | 0.9 |
| Polyester compound A-1 | Contained or not contained | - | Not contained | Not contained | Contained | Contained | Not contained | Not contained | Contained | Contained | Contained |
| | Content | % by mass | - | - | 0.2 | 0.2 | - | - | 0.2 | 0.2 | 0.2 |
| Organic zinc compound | Content | % by mass | 3.0 | 3.0 | 3.0 | 3.0 | 3.0 | 3.0 | 3.0 | 3.0 | 3.0 |
| Carrier fluid | Kind | - | Silicone | Silicone | Silicone | Silicone | Blend | Blend | Blend | Blend | Blend |
| | Blend ratio PAO/ester | - | - | - | - | - | 8/2 | 8/2 | 8/2 | 8/2 | 8/2 |
| Magnetic particle | Content | %by volume | 30 | 30 | 30 | 30 | 40 | 40 | 40 | 40 | 40 |
| Durability | | MJ/ml | 4.0 | 3.7 | 4.9 | 4.6 | 2.5 | 2.3 | 4.5 | 4.0 | 6.0 |

Although the magneto rheological fluids of Comparative Examples 1, 3, 5, and 7 contain an organic zinc compound, they do not contain melamine (iso)cyanurate.

On the other hand, melamine (iso)cyanurate is a component capable of functioning as a solid lubricant, whereas the magneto rheological fluids of Comparative Examples 2, 4, 6, 8, and 9 contain, together with an organic zinc compound, a component known as a solid lubricant instead of melamine (iso)cyanurate.

From the comparison between the results shown in Table 2 and the results shown in Table 3, it can be confirmed that as compared with the magneto rheological fluids of these Comparative Examples, the magneto rheological fluids of Examples in which an organic zinc compound and melamine (iso)cyanurate are used in combination is excellent in durability.

Industrial Applicability

An aspect of the present invention is useful in various technical fields in which a magneto rheological fluid is used and in various technical fields in which a magneto rheological fluid is expected to be used.

**Claims**

**1.** A magneto rheological fluid comprising:

magnetic particles;
a carrier fluid;
an organic zinc compound; and
melamine (iso)cyanurate.

**2.** The magneto rheological fluid according to claim 1,
wherein the organic zinc compound is zinc dialkyldithiophosphate.

**3.** The magneto rheological fluid according to claim 1,
wherein a content of the organic zinc compound is 1.0% by mass or more and 7.0% by mass or less with respect to a mass of the magneto rheological fluid excluding a mass of the magnetic particles.

**4.** The magneto rheological fluid according to claim 1,
wherein a content of the melamine (iso)cyanurate is 0.5% by mass or more with respect to a mass of the magneto rheological fluid excluding a mass of the magnetic particles.

**5.** The magneto rheological fluid according to claim 1, further comprising:

a polyester compound obtained by condensing components including;
a polyhydric alcohol which is trihydric or higher hydric,
a polyvalent carboxylic acid which is divalent or higher valent, and
one or more selected from the group consisting of a monohydric alcohol and a monovalent carboxylic acid.

**6.** The magneto rheological fluid according to claim 1,
wherein the carrier fluid is a silicone-based fluid.

**7.** The magneto rheological fluid according to claim 1,
wherein the carrier fluid is a mixture of a poly-alpha-olefin-based fluid and an ester-based fluid.

**8.** The magneto rheological fluid according to claim 7,
wherein the ester-based fluid is a polyol ester-based fluid.

**9.** The magneto rheological fluid according to claim 1, further comprising:
a copper carboxylate.

**10.** The magneto rheological fluid according to claim 9,
wherein the copper carboxylate is copper oleate.

**11.** The magneto rheological fluid according to claim 1, further comprising one or more selected from the group consisting of a phenol-based compound and a sulfur-based compound.

**12.** The magneto rheological fluid according to claim 11,
wherein the phenol-based compound is a hindered phenol-based compound.

**13.** The magneto rheological fluid according to claim 11,
wherein the sulfur-based compound is a thioether-based compound.

**14.** The magneto rheological fluid according to claim 1, further comprising acrylic silicone.

**15.** The magneto rheological fluid according to claim 1,

wherein the organic zinc compound is zinc dialkyldithiophosphate,
a content of the organic zinc compound is 1.0% by mass or more and 7.0% by mass or less with respect to a mass of the magneto rheological fluid excluding a mass of the magnetic particles,
a content of the melamine (iso)cyanurate is 0.5% by mass or more with respect to the mass of the magneto rheological fluid excluding the mass of the magnetic particles,
one or more selected from the group consisting of a phenol-based compound and a sulfur-based compound, and an acrylic silicone are further contained, and
the carrier fluid is a silicone-based fluid or a mixture of a poly-alpha-olefin-based fluid and an ester-based fluid.

**16.** The magneto rheological fluid according to claim 15, further comprising:

a polyester compound obtained by condensing components including;
a polyhydric alcohol which is trihydric or higher hydric,
a polyvalent carboxylic acid which is divalent or higher valent, and
one or more selected from the group consisting of a monohydric alcohol and a monovalent carboxylic acid.

**17.** The magneto rheological fluid according to claim 15, further comprising a copper carboxylate.

**18.** The magneto rheological fluid according to claim 17,
wherein the copper carboxylate is copper oleate.

**19.** A magneto rheological fluid device comprising:
the magneto rheological fluid according to any one of claims 1 to 18.

| INTERNATIONAL SEARCH REPORT | International application No. PCT/JP2022/028587 |
|---|---|

**A. CLASSIFICATION OF SUBJECT MATTER**

***H01F 1/44***(2006.01)i; ***C08K 3/22***(2006.01)i; ***C08K 5/098***(2006.01)i; ***C08K 5/13***(2006.01)i; ***C08K 5/3477***(2006.01)i; ***C08K 5/372***(2006.01)i; ***C08K 5/5398***(2006.01)i; ***C08L 51/00***(2006.01)i; ***C08L 67/00***(2006.01)i; ***C08L 101/00***(2006.01)i
FI: H01F1/44 170; C08K3/22; C08K5/098; C08K5/13; C08K5/3477; C08K5/372; C08K5/5398; C08L51/00; C08L67/00; C08L101/00

According to International Patent Classification (IPC) or to both national classification and IPC

**B. FIELDS SEARCHED**

Minimum documentation searched (classification system followed by classification symbols)

H01F1/44; C08K3/22; C08K5/098; C08K5/13; C08K5/3477; C08K5/372; C08K5/5398; C08L51/00; C08L67/00; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-141049 A (FUJIFILM CORP.) 13 September 2018 (2018-09-13) | 1-19 |
| A | JP 2009-185100 A (NOK KLUBER KK) 20 August 2009 (2009-08-20) | 1-19 |
| A | JP 2019-33222 A (COSMO OIL LUBRICANTS CO., LTD.) 28 February 2019 (2019-02-28) | 1-19 |
| A | JP 2019-167550 A (LUBRIZOL ADVANCED MATERIALS INC.) 03 October 2019 (2019-10-03) | 1-19 |
| A | JP 11-246886 A (NIPPON SEIKO KK) 14 September 1999 (1999-09-14) | 1-19 |
| A | CN 111574828 A (SHANGHAI ZHIRAN NEW MATERIAL CO., LTD.) 25 August 2020 (2020-08-25) | 1-19 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 September 2022** | **20 September 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/028587**

| Patent document cited in search report | Publication date (day/month/year) | Patent family member(s) | Publication date (day/month/year) |
|---|---|---|---|
| JP 2018-141049 A | 13 September 2018 | (Family: none) | |
| JP 2009-185100 A | 20 August 2009 | US 2010/0305012 A1<br>US 2012/0264663 A1<br>WO 2009/096570 A1 | |
| JP 2019-33222 A | 28 February 2019 | (Family: none) | |
| JP 2019-167550 A | 03 October 2019 | US 2016/0264731 A1<br>WO 2015/065753 A1<br>KR 10-2016-0083036 A<br>CN 105899578 A | |
| JP 11-246886 A | 14 September 1999 | US 6548454 B1<br>GB 2329905 A | |
| CN 111574828 A | 25 August 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6560073 B
- JP 9184832 A
- JP H9184832 A
- JP 2001501989 A
- JP 2001500549 A
- JP 2001507334 A
- JP 2002509563 A


### Non-patent literature cited in the description


- *J. Japan petrol. Inst.,* 1983, vol. 26 (1), 50-56